(19) Europäisches Patentamt / European Patent Office / Office européen des brevets

(11) **EP 3 306 216 B1**

(12) **EUROPEAN PATENT SPECIFICATION**

(45) Date of publication and mention
of the grant of the patent:
**01.01.2020 Bulletin 2020/01**

(21) Application number: **15894223.5**

(22) Date of filing: **04.06.2015**

(51) Int Cl.:
*F25B 1/00* *(2006.01)*       *F25B 49/02* *(2006.01)*
*F24F 11/30* *(2018.01)*      *F24F 11/63* *(2018.01)*
*F24F 11/64* *(2018.01)*      *F24F 11/85* *(2018.01)*
*F25B 25/00* *(2006.01)*      *F24F 110/10* *(2018.01)*
*F24F 140/20* *(2018.01)*     *F25B 13/00* *(2006.01)*
*F25B 30/02* *(2006.01)*

(86) International application number:
**PCT/JP2015/066159**

(87) International publication number:
**WO 2016/194190 (08.12.2016 Gazette 2016/49)**

(54) **CONTROL DEVICE FOR HEAT-PUMP-USING SYSTEM, AND HEAT-PUMP-USING SYSTEM PROVIDED WITH SAME**

STEUERUNGSVORRICHTUNG FÜR WÄRMEPUMPENVERWENDENDES SYSTEM UND DAMIT AUSGESTATTETES WÄRMEPUMPENVERWENDENDES SYSTEM

DISPOSITIF DE RÉGULATION POUR SYSTÈME À POMPE À CHALEUR, ET SYSTÈME À POMPE À CHALEUR MUNI DUDIT DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.04.2018 Bulletin 2018/15**

(73) Proprietor: **Mitsubishi Electric Corporation
Chiyoda-ku
Tokyo 100-8310 (JP)**

(72) Inventors:
• **NAKAI, Takahiro**
  **Tokyo 100-8310 (JP)**
• **FUJITSUKA, Masashi**
  **Tokyo 100-8310 (JP)**
• **UNO, Yoshitaka**
  **Tokyo 100-8310 (JP)**
• **YAMAMOTO, Takaya**
  **Tokyo 100-8310 (JP)**

(74) Representative: **Trinks, Ole
Meissner Bolte Patentanwälte
Rechtsanwälte Partnerschaft mbB
Widenmayerstraße 47
80538 München (DE)**

(56) References cited:
EP-A2- 1 707 886          WO-A1-2010/070842
JP-A- 2000 274 789        JP-A- 2004 069 134
JP-A- 2004 069 134        JP-B2- 5 340 406
US-A1- 2013 167 572

**Description**

Technical Field

The present invention relates to a controller of a heat pump utilization system and a heat pump utilization system having the same.

Background Art

Patent Literature 1 describes an air-conditioning system. The air-conditioning system includes an optimization controller configured to calculate a coil temperature target value of an air-conditioning coil and cold and hot water temperature target values of a heat source unit so as to minimize the power required for air conditioning including the power of the heat source unit, the power of the fan, and the power of the pump. The air-conditioning system also includes a local controller that controls the fan and the pump such that the coil temperature and the cold and hot water temperature become the coil temperature target value and the cold and hot water temperature target values calculated by the optimization

Patent Literature 2 describes a heat pump system comprising a controller according to the preamble of claim 1.

Citation List

Patent Literature

Patent Literature 1 Japanese Unexamined Patent Application Publication No. 2004-69134
Patent Literature 2 International Patent Application Publication WO-A-2010070842

Summary of Invention

Technical Problem

However, by controlling the rotation speed of a pump to be variable as in the air conditioning system of Patent Literature 1, the dead time changes along with a change of the flow rate. In particular, when a target value of each type of temperature is changed, each type of temperature and the rotation speed of the pump and the fan are vibrated. Thereby, fluctuation of the room temperature is increased. This causes a problem that comfortability is impaired.

The present invention has been made to solve the aforementioned problem. An object of the present invention is to provide a controller of a heat pump utilization system capable of improving comfortability, and a heat pump utilization system having the same.

Solution to Problem

A controller of a heat pump utilization system, according to an embodiment of the present invention, is a controller that controls the heat pump utilization system including a heat source side circulation circuit in which a first heat medium circulates, and a use side circulation circuit in which a second heat medium circulates. The heat source side circulation circuit is connected with at least a frequency variable compressor and an intermediate heat exchanger in which the first heat medium and the second heat medium exchange heat. The use side circulation circuit is connected with at least a circulation pump having a variable rotation speed, the intermediate heat exchanger, and an indoor heat exchanger in which the second heat medium and the indoor air exchange heat. The controller includes a room temperature control unit configured to generate a heat amount command, based on a room temperature and a set room temperature that is a target value of the room temperature, a frequency command generation unit configured to generate a frequency command to the compressor, based on the heat amount command, a circulation temperature command generation unit configured to generate a circulation temperature command that is a command of circulation temperature of the second heat medium, based on the heat amount command, a circulation temperature control unit configured to generate a rotation speed command to the circulation pump by feedback control using at least a proportional coefficient, based on the circulation temperature and the circulation temperature command, and a correction coefficient generation unit configured to generate a correction coefficient, based on the circulation flow rate of the second heat medium and a preset circulation flow rate reference value. The circulation temperature is any of an inflow temperature of the second heat medium flowing into the intermediate heat exchanger, outflow temperature of the second heat medium flowing out of the intermediate heat exchanger, and a temperature difference between the outflow temperature and the inflow temperature. The circulation temperature control unit calculates the proportional coefficient by multiplying a preset proportional coefficient reference value by the correction coefficient. The correction coefficient generation unit generates the correction coefficient such that when the circulation flow rate increases beyond the circulation flow rate reference value, the proportional coefficient increases beyond the proportional coefficient reference value, while when the circulation flow rate decreases beyond the circulation flow rate reference value, the proportional coefficient decreases beyond the proportional coefficient reference value.

A heat pump utilization system according to an embodiment of the present invention is provided with the controller of the heat pump utilization system described above.

Advantageous Effects of Invention

According to an embodiment of the present invention, a proportional coefficient can be corrected by a correction coefficient generated by using a circulation flow rate. Accordingly, it is possible to suppress an influence of a change in the dead time accompanying a change in the circulation flow rate. Therefore, fluctuation of the room temperature can be decreased, whereby comfortability is improved.

Brief Description of Drawings

FIG. 1   is a diagram illustrating exemplary installation of a heat pump utilization system according to Embodiment 1 of the present invention.

FIG. 2   is a circuit configuration diagram illustrating a heat medium circuit of the heat pump utilization system according to Embodiment 1 of the present invention.

FIG. 3   is a functional block diagram illustrating an exemplary configuration of a controller of the heat pump utilization system according to Embodiment 1 of the present invention.

FIG. 4   is a block diagram illustrating exemplary control blocks of the heat pump utilization system according to Embodiment 1 of the present invention.

FIG. 5   is a block diagram illustrating exemplary control blocks of a room temperature control unit 18 in the heat pump utilization system according to Embodiment 1 of the present invention.

FIG. 6   is a diagram illustrating examples of static characteristics of the heat pump utilization system according to Embodiment 1 of the present invention.

FIG. 7   is a block diagram illustrating exemplary control blocks of a circulation temperature control unit 21 in the heat pump utilization system according to Embodiment 1 of the present invention.

FIG. 8   is a block diagram illustrating another example of control blocks of the circulation temperature control unit 21 in the heat pump utilization system according to Embodiment 1 of the present invention.

FIG. 9   is a table showing control coefficients designed by the CHR method in the case where an object is to follow a target value with no overshoot.

FIG. 10   is a table showing control coefficients designed by the CHR method in the case where an object is to follow a target value when overshoot is 20%.

FIG. 11   is a table showing control coefficients designed by Ziegler-Nichols step response method.

FIG. 12   is a block diagram illustrating another example of control blocks of the controller of the heat pump utilization system according to Embodiment 1 of the present invention.

FIG. 13   is a block diagram illustrating still another example of control blocks of the controller of the heat pump utilization system according to Embodiment 1 of the present invention.

FIG. 14   is a graph illustrating an exemplary simulation of circulation temperature control in the controller of the heat pump utilization system according to Embodiment 1 of the present invention.

Fig. 15   is a graph illustrating an exemplary simulation of circulation temperature control in the controller of the heat pump utilization system according to Embodiment 1 of the present invention.

FIG. 16   is a graph illustrating an example of system identification in a controller of a heat pump utilization system according to Embodiment 2 of the present invention.

FIG. 17   is a block diagram illustrating exemplary control blocks of a controller of a heat pump utilization system according to Embodiment 3 of the present invention.

FIG. 18   is a block diagram illustrating exemplary control blocks of a frequency command generation unit 19 in a controller of a heat pump utilization system according to Embodiment 4 of the present invention.

Description of Embodiments

Embodiment 1

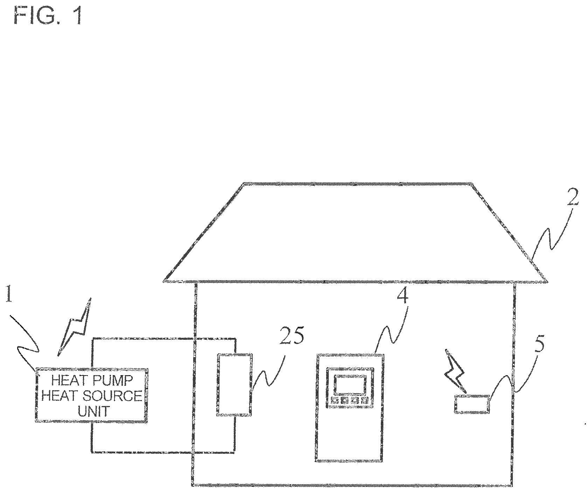

A controller of a heat pump utilization system and a heat pump utilization system having thereof, according to Embodiment 1 of the present invention, will be described. FIG. 1 is a diagram illustrating exemplary installation of a heat pump utilization system according to the present embodiment. In the present embodiment, a heat pump utilization system for a house is exemplary shown as a heat pump utilization system. It should be noted that in the drawings described below including FIG. 1, relative dimensional relationships, shapes, and the like of the respective constituent members may differ from actual ones.

As illustrated in FIG. 1, a heat pump utilization system is installed in a building 2 having an indoor space that is a cooling and heating control target. The heat pump utilization system includes a heat pump heat source unit 1 that generates a heat amount used for cooling and heating the inside of a room of the building 2, an indoor unit 25 that cools or heats the inside of the room by discharging cooling energy or heating energy supplied from the heat pump heat source unit 1 to the inside of the room of the building 2, a room temperature sensor unit 5 that measures the room temperature in the building 2, and a controller 4 that gives a command to the heat pump heat source unit 1 to allow the room temperature, acquired from the room temperature sensor unit 5, to approach a set room temperature (hereinafter referred to as a "system control device"). The system control device 4, the heat pump heat source unit 1, the indoor unit 25, and the room temperature sensor unit 5 are communicably connected with each other in a wired or wireless manner. Between the system control device 4, the heat pump heat source unit 1, the indoor unit 25, and the room temperature sensor unit 5, temperature information, setting information, operation information, and other kinds of information required for control and protection are exchanged. Examples of the types of the indoor unit 25 include a floor heater, a radiator, a fan coil unit, and other units.

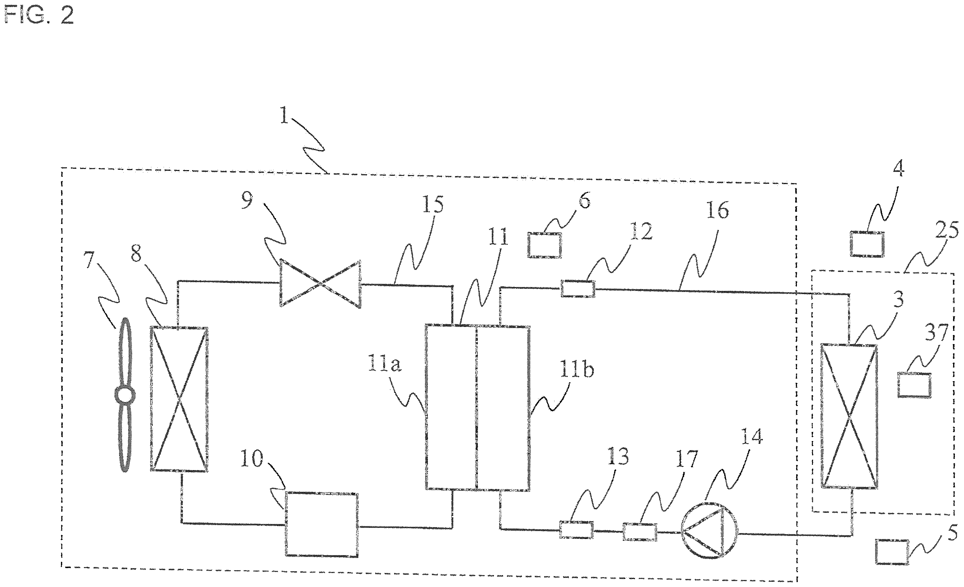

FIG. 2 is a circuit configuration diagram illustrating a configuration of a heat medium circuit of the heat pump utilization system according to the present embodiment. As illustrated in FIG. 2, the heat pump utilization system includes a heat source side circulation circuit 15 and a use side circulation circuit 16.

The heat source side circulation circuit 15 is a heat pump circuit in which a first heat medium circulates. In the present embodiment, refrigerant such as $CO_2$ or R410a is used as the first heat medium. Hereinafter, the first heat medium may also be referred to as refrigerant. In the heat source side circulation circuit 15, a compressor 10, a first heat medium passage 11a of an intermediate heat exchanger 11, decompression device 9, an outdoor heat exchanger 8, and other devices are annularly connected in series.

The compressor 10 is a fluid machine that sucks low-pressure gas refrigerant, compresses it, and discharges it as high-pressure refrigerant. The compressor 10 of the present embodiment is a frequency variable inverter compressor. The frequency of the compressor 10 can be changed continuously, for example. The refrigerant circulation amount of the heat source side circulation circuit 15 is adjusted by adjusting the frequency of the compressor 10. The intermediate heat exchanger 11 includes the first heat medium passage 11a and a second heat medium passage 11b. In the intermediate heat exchanger 11, the refrigerant flowing through the first heat medium passage 11a and a second heat medium flowing through the second heat medium passage 11b exchange heat. In the heat source side circulation circuit 15, the intermediate heat exchanger 11 of the present embodiment serves as a radiator for allowing the refrigerant to reject heat to the second heat medium (for example, condenser). This means that in the intermediate heat exchanger 11 of the present embodiment, the second heat medium is heated by the rejection of the heating energy from the refrigerant.

The decompression device 9 decompresses high-pressure refrigerant into low-pressure refrigerant. As the decompression device 9, an expansion valve in which the opening degree is adjustable (for example, electronic expansion valve) or other devices is used. The outdoor heat exchanger 8 is a heat exchanger that allows heat exchange between the refrigerant flowing inside and outside fluid (in the present embodiment, outdoor air). The outdoor heat exchanger 8 of the present embodiment serves as an evaporator that vaporizes refrigerant and receive heat of evaporation from the outdoor air. To the outdoor heat exchanger 8, outdoor air is sent by an outdoor fan 7 having variable rotation speed, for example. The endothermic amount of the refrigerant is adjusted by adjusting the rotation speed of the outdoor fan 7.

The compressor 10, the intermediate heat exchanger 11, the decompression device 9, the outdoor heat exchanger 8, and the outdoor fan 7 are accommodated in the heat pump heat source unit 1. The heat pump heat source unit 1 is installed outside the building 2, for example.

Here, the heat source side circulation circuit 15 of the present embodiment is able to perform only a heating operation in which the intermediate heat exchanger 11 serves as a radiator. However, the heat source side circulation circuit 15 may be able to perform a cooling operation in which the intermediate heat exchanger 11 serves as an evaporator, or may be able to perform switching between the heating operation and the cooling operation by a four-way valve or other components.

The use side circulation circuit 16 is a circuit in which the second heat medium circulates. As the second heat medium, a liquid heat medium such as water or antifreeze is used, for example. In the use side circulation circuit 16, a circulation pump 14 having variable rotation speed, the second heat medium passage 11b of the intermediate heat exchanger 11, an indoor heat exchanger 3, and other components are annularly connected in series.

The circulation pump 14 is a fluid machine that causes the second heat medium to circulate in the use side circulation circuit 16. The rotation speed of the circulation pump 14 can be changed continuously, for example. The flow rate of the second heat medium circulating the use side circulation circuit 16 is adjusted by adjusting the rotation speed of the circulation pump 14. The indoor heat exchanger 3 is a heat exchanger that allows the second heat medium and the indoor air to exchange heat. In the indoor heat exchanger 3 of the present embodiment, the indoor air is heated by the rejection of the heating energy from the second heat medium.

The circulation pump 14 and the intermediate heat exchanger 11 are accommodated in the heat pump heat source unit 1. The indoor heat exchanger 3 is accommodated in the indoor unit 25.

The use side circulation circuit 16 is provided with an inflow temperature sensor unit 13, an outflow temperature sensor unit 12, and a flow rate sensor unit 17, as detectors. The inflow temperature sensor unit 13 detects the temperature of the second heat medium flowing into the second heat medium passage 11b of the intermediate heat exchanger 11. The outflow temperature sensor unit 12 detects the temperature of the second heat medium flowing out of the second heat medium passage 11b of the intermediate heat exchanger 11. The flow rate sensor unit 17 detects a flow rate of the second heat medium circulating the use side circulation circuit 16. Detection signals of the inflow temperature sensor unit 13, the outflow temperature sensor unit 12, and the flow rate sensor unit 17 are transmitted to the system control device 4 as analog information or digital information. The system control device 4 acquires inflow temperature information, an outflow temperature information, and flow rate information, based on the detection signals from the inflow temperature sensor unit 13, the outflow temperature sensor unit 12, and the flow rate sensor unit 17, respectively. In the system control device 4, the information thus acquired are used for room temperature control, circulation temperature control, protection, and other purposes.

In this example, circulation temperature means any of the inflow temperature of the second heat medium flowing into the intermediate heat exchanger 11, the outflow temperature of the second heat medium flowing out of the intermediate heat exchanger 11, and the temperature difference between the outflow temperature and the inflow temperature.

While the respective passages of the heat source side circulation circuit 15 and the use side circulation circuit 16 are independent from each other, the heat source side circulation circuit 15 and the use side circulation circuit 16 are thermally connected. This means that the first heat medium (refrigerant in the present embodiment) circulating the heat source side circulation circuit 15 absorbs heat from the outdoor air in the outdoor heat exchanger 8, and rejects heat to the second heat medium in the intermediate heat exchanger 11. The second heat medium circulating the use side circulation circuit 16 absorbs heat from the first heat medium in the intermediate heat exchanger 11, and rejects heat to the indoor air in the indoor heat exchanger 3. Thereby, the outdoor heat moves to the inside of the room via the heat source side circulation circuit 15 and the use side circulation circuit 16.

The heat pump heat source unit 1 is provided with a heat source unit control device 6. The indoor unit 25 is provided with an indoor unit control device 37. The heat source unit control device 6 and the indoor unit control device 37 are communicably connected with respective actuators and respective sensors provided to the heat source side circulation circuit 15 and the use side circulation circuit 16 in a wired or wireless manner. Further, the heat source unit control device 6 and the indoor unit control device 37 are communicably connected with the system control device 4 in a wired or wireless manner. Among the system control device 4, the heat source unit control device 6, and the indoor unit control device 37, various types of sensor information, operation information, operation command information, and other kinds of information are communicated. Thereby, in the heat source unit control device 6, drive control of the compressor 10, the decompression device 9, the outdoor fan 7, and other components is performed to generate a heat amount required by the system control device 4. Further, in the indoor unit control device 37, an indoor fan (not illustrated) for adjusting the heat rejection amount in the indoor heat exchanger 3 and an actuator such as a valve (not illustrated) for adjusting the flow rate of the second heat medium flowing into the indoor heat exchanger 3 are controlled.

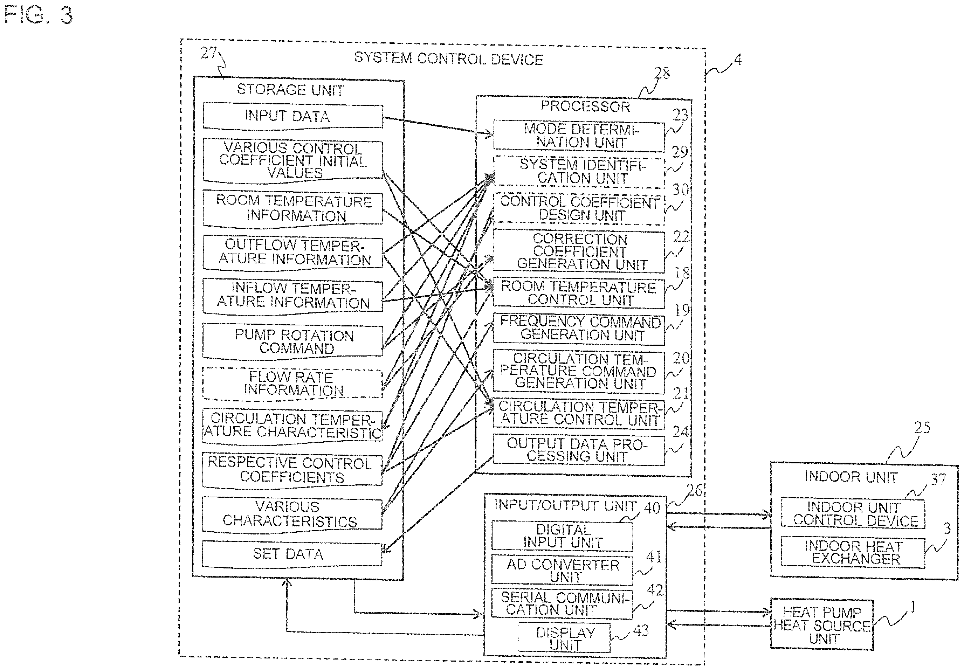

FIG. 3 is a functional block diagram illustrating an exemplary configuration of a controller (system control device 4) of the heat pump utilization system according to the present embodiment. As illustrated in FIG. 3, the system control device 4 includes an input/output unit 26 through which various types of information such as sensor information and operation information are exchanged with the indoor unit 25 and the heat pump heat source unit 1, a storage unit 27 that stores various types of information, and a processor 28 that performs necessary arithmetic processing such as room temperature control and circulation temperature control.

The processor 28 includes, as function blocks, a mode determination unit 23, a system identification unit 29, a control coefficient design unit 30, a correction coefficient generation unit 22, a room temperature control unit 18, a frequency command generation unit 19, a circulation temperature command generation unit 20, a circulation temperature control unit 21, and an output data processing unit 24. The processor 28 performs various types of arithmetic operation by using information stored in the storage unit 27. For example, the mode determination unit 23 determines a mode such as cooling/heating or water heating, according to the input data from the input/output unit 26.

In the storage unit 27, information input from the indoor unit 25, the heat pump heat source unit 1, and other components via the input/output unit 26, and preset information are stored. Information to be stored in the storage unit 27 includes input data, respective control coefficient initial values, room temperature information, outflow temperature information, inflow temperature information, pump rotation command, flow rate information, circulation temperature characteristics, respective control coefficients, respective types of characteristics, set data, and other kinds of information. For example, respective control coefficient initial values are initial set values of respective control coefficients used in the room temperature control unit 18 and the circulation temperature control unit 21. Room temperature information, outflow temperature information, inflow temperature information, and flow rate information are information input from the room temperature sensor unit 5, the inflow temperature sensor unit 13, the outflow temperature sensor unit 12, and the flow rate sensor unit 17, respectively, via the input/output unit 26. When information correlated with the circulation flow rate such as a rotation command or a rotation speed of the circulation pump 14 is stored, flow rate information is not necessarily required. Circulation temperature characteristics are characteristics such as a heat amount with respect to the circulation temperature. Respective control coefficients are coefficients calculated by the system identification unit 29 and the control coefficient design unit 30, which include a proportional coefficient and an integration coefficient to be described below. Set data is data set by a user. A heat amount command (frequency command of the compressor 10) to the heat pump heat source unit 1 calculated by the processor 28 and a rotation speed command to the circulation pump 14 are temporarily stored in the storage unit 27 as set data, and are transmitted via the input/output unit 26.

The input/output unit 26 includes a digital input unit 40, an AD converter unit 41, a serial communication unit 42, and a display unit 43. The digital input unit 40 is a function block that inputs operation information on the indoor unit 25 and the heat pump heat source unit 1, switch information on the system control device 4, or output information on a flow switch provided to the use side circulation circuit 16, as digital signals. The AD converter unit 41 is a function block that converts analog information output from the room temperature sensor unit 5, the outflow temperature sensor unit 12, and the inflow temperature sensor unit 13, into digital information. The serial communication unit 42 is an interface for serial communication for exchanging various types of setting information and sensor information, with the indoor unit 25, the heat pump heat source unit 1, and other units. It is also possible to receive room temperature information from a remote controller wirelessly. The display unit 43 is a liquid crystal display device that displays information such as set room temperature, current room temperature, and tapping temperature, for example, on a screen.

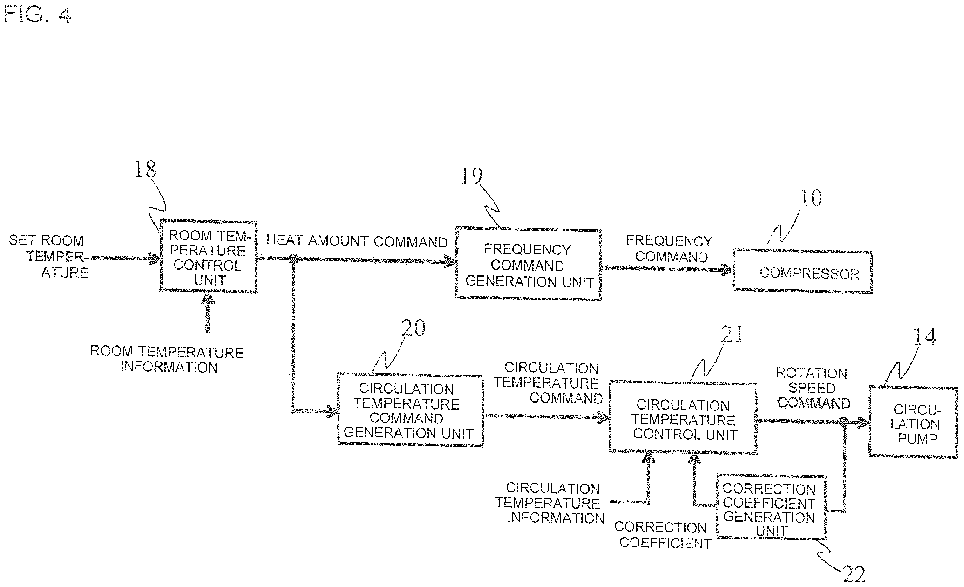

FIG. 4 is a block diagram illustrating exemplary control blocks of the controller of the heat pump utilization system according to the present embodiment. As illustrated in FIG. 4, control blocks of the system control device 4 include a heat source side control system that controls a heat amount of the heat source side circulation circuit 15 by using the frequency of the compressor 10 as a final operation amount of the control, and a use side control system that controls a heat amount of the use side circulation circuit 16 by using the rotation speed of the circulation pump 14 as a final operation amount of the control. The heat source side control system includes the room temperature control unit 18 that generates a heat amount command based on the room temperature information and a set room temperature that is a target value of the room temperature, and the frequency command generation unit 19 that generates a frequency command to the compressor 10 based on the heat amount command, for example. Upon receiving the frequency command, the compressor 10 operates to approach the commanded frequency. The use side control system includes the circulation temperature command generation unit 20 that generates a circulation temperature command of the use side circulation circuit 16 based on the heat amount command from the room temperature control unit 18, the circulation temperature control unit 21 that generates a rotation speed command to the circulation pump 14 based on the circulation temperature command, the circulation temperature information, and the correction coefficient, and the correction coefficient generation unit 22 that generates a correction coefficient from the rotation speed command. Upon receiving the rotation speed command, the circulation pump 14 operates to approach the commanded rotation speed.

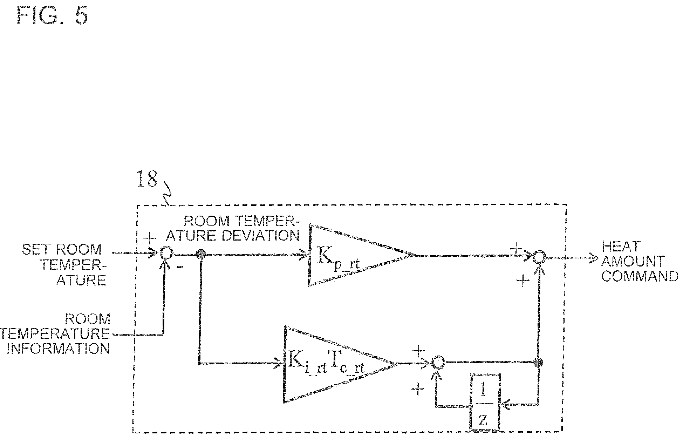

FIG. 5 is a block diagram illustrating exemplary control blocks of the room temperature control unit 18 in the controller of the heat pump utilization system according to the present embodiment. FIG. 5 illustrates an example using a digital PI (proportional integral) controller. A proportional coefficient of the controller is $K_{p\_rt}$, an integration coefficient of the controller is $K_{i\_rt}$, a control cycle is $T_{c\_rt}$, and a lead element is z. Assuming that a room temperature deviation that is a difference between the set room temperature and the room temperature information is $T_{rt\_err}$, a heat amount command by the proportional control is $Q_{ref\_p}$, and a heat amount command by the integral control is $Q_{ref\_i}$, a heat amount command $Q_{ref}$ is represented by Expression (1).

[Expression 1]

$$Q_{ref\_p}[k]=K_{p\_rt}*T_{rt\_err}[k]$$

$$Q_{ref\_i}[k]= Q_{ref\_i}[k-1]+K_{i\_rt}*T_{c\_rt}*T_{rt\_err}[k]$$

$$Q_{ref}[k]=Q_{ref\_p}[k]+Q_{ref\_i}[k] \cdots (1)$$

Here, k represents the number of samples, and k-1 represents one sample before.

The proportional coefficient $K_{p\_rt}$ of the controller and the integration coefficient $K_{i\_rt}$ of the controller can be designed as described below. Assuming that the heat characteristic of a building used for designing the control coefficient of a feedback controller is a transfer function of a primary delay system, a transfer function from the heat amount to the room temperature is expressed as Expression (2).

[Expression 2]

$$\frac{K_r}{\tau_r s + 1} \quad \cdots (2)$$

Here, $K_r$ represents a proportional coefficient of the heat characteristic of the building, $\tau_r$ represents a time constant of the heat characteristic of the building, and s represents Laplacian operator. A PI controller of the continuous system is expressed as Expression (3)

[Expression 3]

$$K_P + K_I \frac{1}{s} \quad \cdots (3)$$

Here, $K_P$ represents a proportional coefficient, $K_I$ represents an integration coefficient. In the case of designing the PI controller of Expression (3) by pole-zero cancellation with respect to the control target of Expression (2), the respective coefficients are expressed by Expression (4) using a design time constant $\tau_c$. [Expression 4]

$$K_P = \frac{\tau_r}{\tau_c K_r}$$

$$\cdots (4)$$

$$K_I = \frac{1}{\tau_c K_r}$$

$K_P$ becomes $K_{p\_rt}$, and $K_I$ becomes $K_{i\_rt}$. It should be noted that while zero order hold (ZOH) discretization is performed in the present embodiment, it is possible to perform discretization by applying Tustin transform to the respective control coefficients designed in the continuous system.

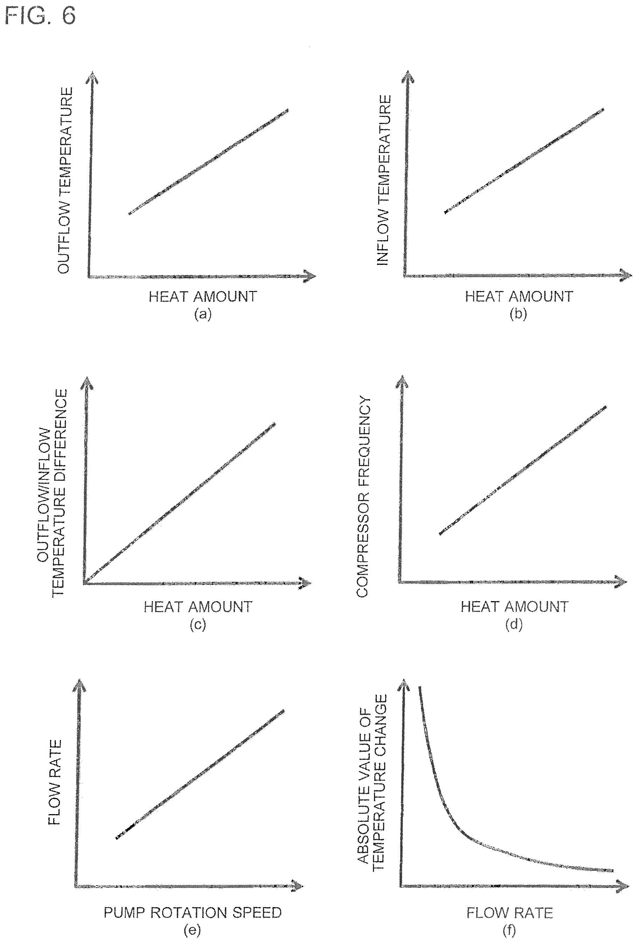

FIG. 6 is a diagram illustrating examples of static characteristics of the heat pump utilization system according to the present embodiment. FIG. 6(a) illustrates an example of a characteristic of the outflow temperature of the second heat medium flowing out of the intermediate heat exchanger 11 with respect to the heat amount (heat amount - outflow temperature characteristic). FIG. 6(b) illustrates an example of a characteristic of the inflow temperature of the second heat medium flowing into the intermediate heat exchanger 11 with respect to the heat amount (heat amount - inflow temperature characteristic). FIG. 6(c) illustrates an example of a characteristic of an outflow/inflow temperature difference that is a difference between the outflow temperature and the inflow temperature (heat amount - outflow/inflow temperature difference characteristic). FIG. 6(d) illustrates an example of a characteristic of a compressor frequency with respect to the heat amount (heat amount - compressor frequency characteristic). FIG. 6(e) illustrates an example of a characteristic of the flow rate of the second heat medium with respect to the pump rotation speed (pump rotation speed - flow rate characteristic). FIG. 6(f) illustrates an example of a characteristic of an absolute value of the circulation temperature variation with respect to t he flow rate of the second heat medium.

The characteristics of the outflow temperature and the inflow temperature with respect to the heat amount can be represented as linear functions as illustrated in FIGS. 6(a) and 6(b). The outflow/inflow temperature difference that is a difference between the outflow temperature and the inflow temperature is in proportion to the heat amount as illustrated in FIG. 6(c). The characteristic of the compressor frequency with respect to the heat amount and the characteristic of the flow rate with respect to the pump rotation speed can be represented as linear functions as illustrated in FIGS. 6 (d) and 6(e), respectively. These characteristics are ideal. However, the heat amount, the outflow temperature, the inflow temperature, the outflow/inflow temperature difference, and the compressor frequency are in a relation that when the heat amount increases, the outflow temperature, the inflow temperature, and the outflow/inflow temperature difference increase according to the linear function, and when the compressor frequency increases, the heat amount increases according to the linear function. Further, the pump rotation speed and the flow rate of the second heat medium are in a relation that when the pump rotation speed increases, the flow rate increases according to the linear function. In the case where approximate precision in a linear function is not high in an actual system, it is also possible to perform approximation using a polynomial such as a quadratic function. Further, as illustrated in FIG. 6(f), an absolute value of each circulation temperature change is in inverse proportion to the flow rate.

Information on these various types of characteristics may be grasped in advance and stored in the storage unit 27. In the present embodiment, as the room temperature control unit 18 and the circulation temperature control unit 21 each has a feedback controller, when the heat pump utilization system is installed, rough values may be input as information on various types of characteristics.

The frequency command generation unit 19 illustrated in FIG. 4 generates a compressor frequency command based on the heat amount command from the room temperature control unit 18 and the characteristic of the compressor frequency with respect to the heat amount illustrated in FIG. 6(d). Alternatively, the frequency command generation unit 19 sets $a_c$ and $b_c$ of a linear function $y_c = a_c x + b_c$, where $y_c$ represents a compressor frequency and x represents a heat amount command, and generates a continuous compressor frequency command. Similarly, the circulation temperature command generation unit 20 generates a circulation temperature command based on the heat amount command from the room temperature control unit 18 and a characteristic illustrated in any of FIG. 6(a) to 6(c). Alternatively, the circulation temperature command generation unit 20 sets at and bt of a linear function $y_t = a_t x + b_t$, where $y_t$ represents a circulation temperature command and x represents a heat amount command, and generates a circulation temperature command. It should be noted that the acquired characteristics illustrated in FIGS. 6(a) to 6(f) are ideal ones to the end. Further, the heat amount may be a heat amount command, the pump rotation speed may be a pump rotation speed command, and the flow rate may be a flow rate command.

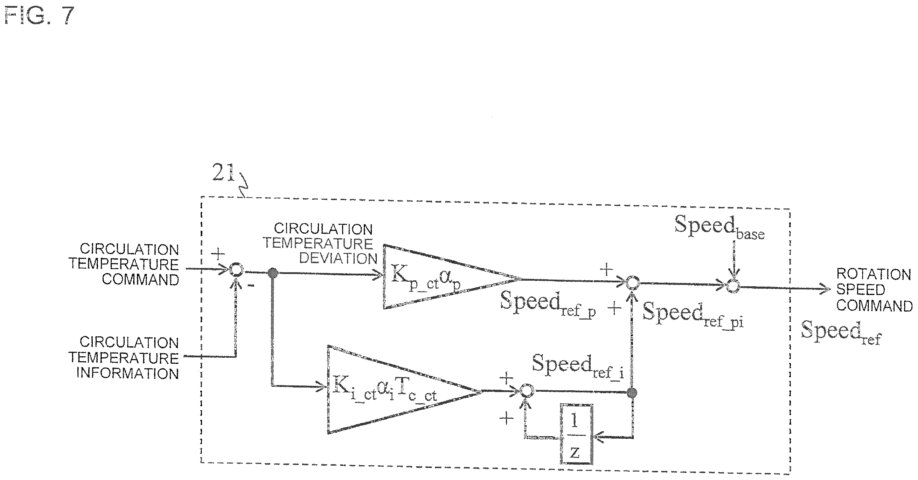

FIG. 7 is a block diagram illustrating exemplary control blocks of the circulation temperature control unit 21 (PI) in the controller of the heat pump utilization system according to the present embodiment. The controller for circulation temperature that is temperature of the second heat medium performs P (proportional) control or PI (proportional integral) control. Assuming that $K_{p\_ct}$ represents a proportional coefficient of the circulation temperature controller, $K_{i\_ct}$ represents an integration coefficient of the circulation temperature controller, $\alpha_p$ represents a correction coefficient of the proportional coefficient, $\alpha_i$ represents a correction coefficient of the integration coefficient, $T_{c\_ct}$ represents the control cycle, z represents a lead element, Speedbase represents a rotation speed at the time of control system design, a rotation speed command $Speed_{ref\_p}$ by the proportional controller, a rotation speed command $Speed_{ref\_i}$ by the integral controller, a rotation speed command $Speed_{ref\_pi}$ by the PI controller, and a rotation speed command $Speed_{ref\_}$ are expressed by Expression (5), respectively.

[Expression 5]

$$Speed_{ref\_p}[k] = K_{p\_ct} * \alpha_p * T_{rt\_err}[k]$$

$$Speed_{ref\_i}[k] = Speed_{ref\_i}[k-1] + K_{i\_rt} * \alpha_i * T_{c\_rt} * T_{rt\_err}[k]$$

$$Speed_{ref\_pi}[k] = Speed_{ref\_p}[k] + Speed_{ref\_i}[k]$$

$$Speed_{ref}[k] = Speed_{ref\_pi}[k] + Speed_{base} \cdots (5)$$

Here, k represents the number of samples, and k-1 represents a value one sample before. It should be noted that as the circulation temperature control unit 21 is a minor loop of the room temperature control, in the circulation temperature control unit 21, an integration term of the PI controller is not indispensable. Only a P controller is also possible. However, as a configuration of protection system of the circulation temperature, PI controller is preferable. This is because as the circulation temperature is likely to agree with the circulation temperature command, a protection condition can be set easily.

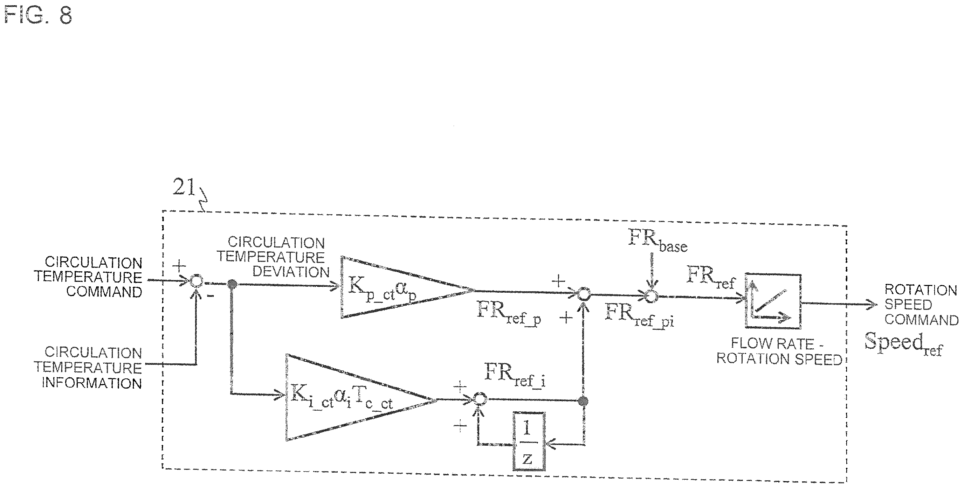

FIG. 8 is a block diagram illustrating another example of a control block of the circulation temperature control unit 21 in the controller of the heat pump utilization system according to the present embodiment. In the example illustrated in FIG. 7, a rotation speed command is directly calculated from the circulation temperature deviation. However, as illustrated in FIG. 8, it is also possible to calculate a flow rate command of the circulation pump 14 from the circulation temperature deviation, and by using a flow rate - pump rotation speed characteristic corresponding to an inverse function of the characteristic illustrated in FIG. 6(e), a rotation speed command can be calculated. For example, it is possible to calculate a flow rate command $FR_{ref}$ by replacing the rotation speed Speedbase at the time of control system design in Expression (5), the rotation speed command $Speed_{ref\_p}$ by the proportional controller, the rotation speed command $Speed_{ref\_i}$ by the integral controller, and the rotation speed command $Speed_{ref\_pi}$ by the PI controller, with the flow rate $FR_{base}$ at the time of control system design, the flow rate command $FR_{ref\_p}$ by the proportional controller, the flow rate command $FR_{ref\_i}$ by the integral controller, and the flow rate command $FR_{ref\_pi}$ by the PI controller, respectively, and adding the flow rate $FR_{base}$ at the time of control system design to the flow rate command $FR_{ref\_pi}$ by the PI controller.

Design of respective control coefficients of the feedback controller of the circulation temperature control unit 21 will be described. A transfer function of a dynamic characteristic from the rotation speed to the circulation temperature of the circulation pump 14 used for designing the feedback controller is described as primary delay system + dead time, as expressed by Expression (6).

[Expression 6]

$$\frac{K}{\tau s + 1} e^{-Ls} \quad \cdots \quad (6)$$

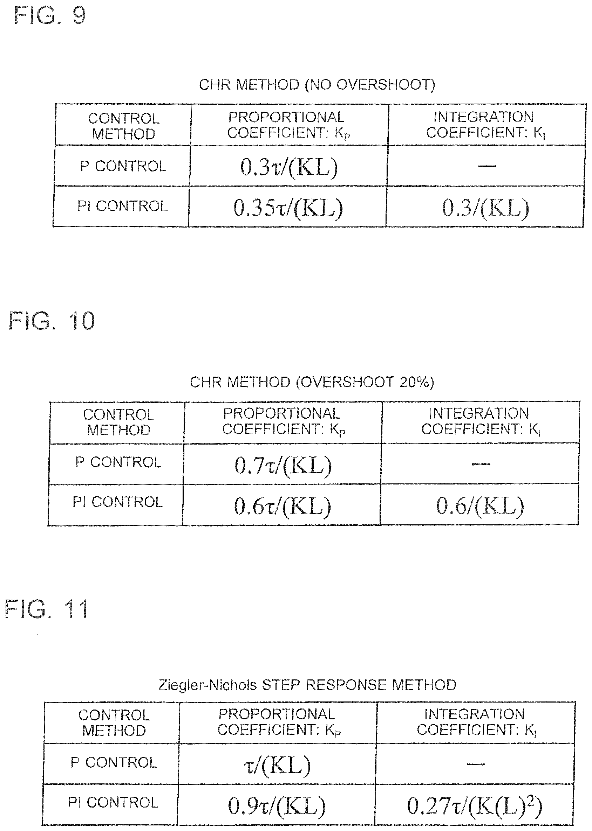

Here, s represents a Laplace operator, K represents a proportional coefficient of the circulation temperature, L represents a dead time, and $\tau$ represents a time constant. The proportional coefficient K of the circulation temperature decreases when the flow rate increases, and it increases when the flow rate decreases. Further, the proportional coefficient K increases when the heat amount increases, while it decreases when the heat amount decreases. The dead time L decreases when the flow rate increases, and it increases when the flow rate decreases. The time constant $\tau$ is not affected by the flow rate and the heat amount. As a controller design method using three parameters such as the proportional coefficient K of the circulation temperature, the dead time L, and the time constant $\tau$, there is a method of designing a control coefficient as illustrated in FIGS. 9 to 11.

FIG. 9 is a table showing control coefficients designed by the CHR method in the case where an object is to follow a target value with no overshoot. FIG. 10 is a table showing control coefficients designed by the CHR method in the case where an object is to follow a target value when overshoot is 20%. FIG. 11 is a table showing control coefficients designed by Ziegler-Nichols step response method. The proportional coefficient $K_P$ of the P control, the proportional coefficient $K_P$ and the integration coefficient $K_I$ of the PI control can be designed as illustrated in FIGS. 9 to 11. While it is possible to design the proportional coefficient $K_P$ and $K_P$ by replacing $\tau_r$ of Expression (4) with $\tau$ and replacing $K_r$ with K, in the case of performing design such that the room temperature does not overshoot or undershoot the set room temperature, the design time constant $\tau_c$ must be about 2.6 times or larger than the dead time L, for example.

The correction coefficient generation unit 22 will be described. The correction coefficient generation unit 22 calculates a correction coefficient $\alpha_p$ of a proportional coefficient reference value when the controller of the circulation temperature control unit 21 is a P controller, while calculates a correction coefficient $\alpha_p$ of a proportional coefficient reference value and a correction coefficient $\alpha_i$ of an integration coefficient reference value when the controller of the circulation temperature control unit 21 is a PI controller. Assuming that the proportional coefficient reference value at the time of control coefficient design is $K_{p\_ct}$, and the integration coefficient reference value is $K_{i\_ct}$, and the proportional coefficient at the time of circulation temperature control is $K_{PC}$, and the integration coefficient is $K_{IC}$, a relationship between each control coefficient reference value and each correction coefficient is expressed as Expression (7).

[Expression 7]

$$K_{PC} = \alpha_p K_{p\_ct}$$
$$K_{IC} = \alpha_i K_{i\_ct} \cdots (7)$$

First, the case of designing a control coefficient by the CHR method (overshoot 20%) will be described. In the case of P control, it is assumed that at the time of control coefficient design, a circulation flow rate is $FR_{ct}$, a proportional coefficient is $K_{p\_ct}$, and a dead time is $L_{ct}$, and at the time of circulation temperature control, a circulation flow rate is $FR_C$, a proportional coefficient is $K_{PC}$, and a dead time is $L_C$. As expressed in Expression (8), the dead time L and the circulation flow rate FR are in inverse proportion to each other, and the proportional coefficient K of the circulation temperature and the circulation flow rate FR are in inverse proportion to each other. Accordingly, the correction coefficient $\alpha_p$ of the proportional coefficient is expressed by Expression (9).

[Expression 8]

$$L \propto \frac{1}{FR}$$
$$K \propto \frac{1}{FR} \qquad \cdots \ (8)$$

[Expression 9]

$$\alpha_p = \frac{K_{PC}}{K_{p\_ct}} = \frac{\dfrac{0.7\tau}{K_C L_C}}{\dfrac{0.7\tau}{K_{ct} L_{ct}}} = \frac{K_{ct} L_{ct}}{K_C L_C} = \left(\frac{FR_C}{FR_{ct}}\right)^2 \qquad \cdots \ (9)$$

As expressed in Expression (9), the correction coefficient $\alpha_p$ of the proportional coefficient is in proportion to the second power of a ratio (circulation flow rate ratio) $FR_C/FR_{ct}$ of the circulation flow rate $FR_C$ at the time of temperature control to the flow rate $FR_{ct}$ at the time of control coefficient design.

In the case of PI control, assuming that the integration coefficient reference value at the time of control coefficient design is $K_{i\_ct}$, and the integration coefficient at the time of circulation temperature control is $K_{IC}$, in addition to the setting of the same variables as those of the case of P control, the correction coefficient $\alpha_p$ of the proportional coefficient and the correction coefficient $\alpha_i$ of the integration coefficient are expressed by Expression (10).

[Expression 10]

$$\alpha_p = \frac{K_{PC}}{K_{p\_ct}} = \frac{\dfrac{0.6\tau}{K_C L_C}}{\dfrac{0.6\tau}{K_{ct} L_{ct}}} = \frac{K_{ct} L_{ct}}{K_C L_C} = \left(\frac{FR_C}{FR_{ct}}\right)^2$$

$$\cdots \ (10)$$

$$\alpha_i = \frac{K_{IC}}{K_{i\_ct}} = \frac{\dfrac{0.6}{K_C L_C}}{\dfrac{0.6}{K_C L_{ct}}} = \frac{K_{ct} L_{ct}}{K_C L_C} = \left(\frac{FR_C}{FR_{ct}}\right)^2$$

As expressed in Expression (10), the correction coefficients $\alpha_p$ and $\alpha_i$ of the respective control coefficients are in proportion to the second power of circulation flow rate ratio $FR_C/FR_{ct}$.

In the case of the CHR method (no overshoot), when calculation that is the same as the aforementioned one is performed, the correction coefficient $\alpha_p$ of the proportional coefficient and the correction coefficient $\alpha_i$ of the integration

coefficient are finally calculated from the circulation flow rate ratio $FR_C/FR_{ct}$, similar to Expressions (9) and (10).

Next, a method of calculating correction coefficients in the case of designing a control coefficient by using a step response method of Ziegler-Nichols (ZN method) will be described. When a variable is set similar to the case of the CHR method, a correction coefficient $\alpha_p$ of a proportional coefficient in the case of P control is expressed by Expression (11), and a correction coefficient $\alpha_p$ of a proportional coefficient and a correction coefficient $\alpha_i$ of an integration coefficient in the case of PI control are expressed by Expression (12).

[Expression 11]

$$\alpha_p = \frac{K_{PC}}{K_{p\_ct}} = \frac{\dfrac{\tau}{K_C L_C}}{\dfrac{\tau}{K_{ct} L_{ct}}} = \frac{K_{ct} L_{ct}}{K_C L_C} = \left(\frac{FR_C}{FR_{ct}}\right)^2 \quad \cdots \quad (11)$$

[Expression 12]

$$\alpha_p = \frac{K_{PC}}{K_{p\_ct}} = \frac{\dfrac{0.9\tau}{K_C L_C}}{\dfrac{0.9\tau}{K_{ct} L_{ct}}} = \frac{L_{ct} L_{ct}}{K_C L_C} = \left(\frac{FR_C}{FR_{ct}}\right)^2$$

$$\cdots \quad (12)$$

$$\alpha_i = \frac{K_{IC}}{K_{i\_ct}} = \frac{\dfrac{0.27}{K_C L_C^2}}{\dfrac{0.27}{K_{ct} L_{ct}^2}} = \frac{K_{ct} L_{ct}^2}{K_C L_C^2} = \left(\frac{FR_C}{FR_{ct}}\right)^3$$

As expressed in Expressions (11) and (12), the correction coefficient $\alpha_p$ of the proportional coefficient in the case of P control and PI control is in proportion to the second power of the circulation flow rate ratio $FR_C/FR_{ct}$, and the correction coefficient $\alpha_i$ of the integration coefficient in the case of PI control is in proportion to the third power of the circulation flow rate ratio $FR_C/FR_{ct}$.

In the case of designing the PI controller by pole-zero cancellation, in the circulation temperature control unit 21, the design time constant $\tau_c$ of Expression (4) is designed to be 2.6 times or larger than the dead time. As such, a variable affecting the circulation flow rate variation becomes a design time constant $\tau_c$. When the design time constant $\tau_c$ is 2.6 times of the dead time $L_C$, respective correction coefficients $\alpha_p$ and $\alpha_i$ are expressed by Expression (13).

[Expression 13]

$$\alpha_p = \frac{K_{PC'}}{K_{p\_ct}} = \frac{\dfrac{\tau}{2.6 L_C K_C}}{\dfrac{\tau}{2.6 L_{ct} K_{ct}}} = \frac{K_{ct} L_{ct}}{K_C L_C} = \left(\frac{FR_C}{FR_{ct}}\right)^2$$

$$\cdots (13)$$

$$\alpha_i = \frac{K_{IC}}{K_{i\_ct}} = \frac{\dfrac{1}{2.6 L_C K_C}}{\dfrac{1}{2.6 L_{ct} K_{ct}}} = \frac{K_{ct} L_{ct}}{K_C L_C} = \left(\frac{FR_C}{FR_{ct}}\right)^2$$

As expressed by Expression (13), both the correction coefficient $\alpha_p$ of the proportional coefficient and the correction coefficient $\alpha_i$ of the integration coefficient are determined by the circulation flow rate ratio $FR_C/FR_{ct}$. It should be noted that in Expression (13), while the design time constant $\tau_c$ is 2.6 time of the dead time $L_C$, the correction coefficient $\alpha_p$ of the proportional coefficient and the correction coefficient $\alpha_i$ of the integration coefficient are also determined by the circulation flow rate ratio $FR_C/FR_{ct}$ even in the case of setting the design time constant $\tau_c$ to be other than 2.6 times of the dead time $L_C$.

Expressions (9) to (13) are established on an assumption that the proportional coefficient K of the circulation temperature is in inverse proportion to the flow rate, the dead time L is in inverse proportion to the flow rate, and the time constant $\tau$ is not affected by the flow rate and the heat amount. When an actual system does not match the assumption, the respective correction coefficients are calculated according to the actual system, and multiplying the respective control coefficient reference values to thereby change the respective control coefficients.

In the present embodiment, a control coefficient design method of a model base type has been given as an example. However, even in the case of determining the control coefficient by trial and error, the present embodiment is applicable. This means that it is possible to use the circulation flow rate when determining a control coefficient and the control coefficient as reference values, and use a circulation flow rate or a value correlated with a circulation flow rate. When the circulation flow rate or a value correlated with the circulation flow rate increases beyond the reference value, the control coefficient can be increased, while when the circulation flow rate or a value correlated with the circulation flow rate decreases beyond the reference value, the correction coefficient causing the control coefficient to decrease can be multiplied by the control coefficient reference value. Further, in the present embodiment, while the correction coefficient is in proportion to the second power or the third power of the circulation flow rate ratio, in the actual system, there is a case where a state is different from the ideal states as illustrated in FIGS. 6(a) to 6(f). In that case, the correction coefficient calculation method may be adjusted according to the actual system. For example, the correction coefficient may not be the second power or the third power of the circulation flow rate ratio but be 1.5 power or 2.5 power of the circulation flow rate ratio, or 0.8 times of the second power or the third power of the circulation flow rate ratio.

As described above, in the correction coefficient generation unit 22, when the circulation flow rate at the time of circulation temperature control increases beyond the reference flow rate at the time of control coefficient design, a correction coefficient that increases the control coefficient is calculated, while when the circulation flow rate at the time of circulation temperature control is decreased beyond the reference flow rate at the time of control coefficient design, a correction coefficient that decreases the control coefficient is calculated. In the feedback controller of the circulation temperature control unit 21, a value calculated by multiplying the control coefficient reference value by the correction coefficient may be used as a control coefficient. Further, even in the case of any design method, a correction coefficient can be calculated based on the circulation flow rate ratio. The circulation flow rate ratio can be estimated by using not the circulation flow rate itself but the rotation speed command, the rotation speed, and the like (for example, a rotation speed at the time of control coefficient design and a rotation speed at the time of circulation temperature control) of the circulation pump 14 correlated with the circulation flow rate. Accordingly, the present embodiment can be carried out even when the flow rate sensor unit 17 for detecting a value of the circulation flow rate is not provided.

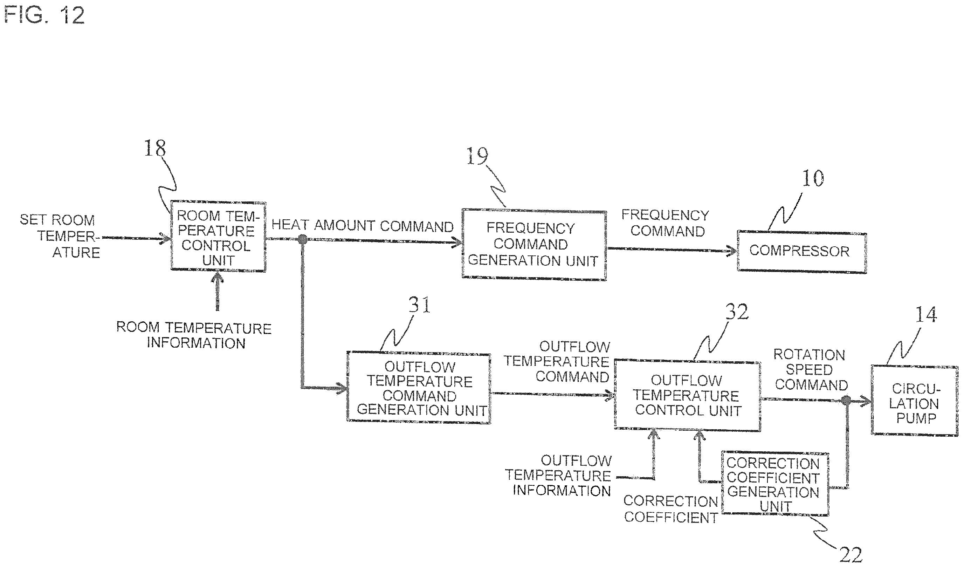

FIG. 12 is a block diagram illustrating another example of control blocks of the controller of the heat pump utilization system according to the present embodiment. In the example illustrated in FIG. 12, the outflow temperature is used as a control target. The outflow temperature is a temperature of the second heat medium detected by the outflow temperature sensor unit 12. An outflow temperature command generation unit 31 and an outflow temperature control unit 32 are function blocks provided to the processor 28. The outflow temperature command generation unit 31 generates an outflow temperature command based on the heat amount command from the room temperature control unit 18 and the heat amount-outflow temperature characteristic illustrated in FIG. 6(a). The outflow temperature control unit 32 generates a rotation speed command to the circulation pump 14, based on the outflow temperature command, the outflow temperature information, and the correction coefficient. Upon receiving the rotation speed command, the circulation pump 14 operates to approach the commanded rotation speed. This means that the circulation pump 14 is controlled by the outflow temperature control unit 32 such that the outflow temperature approaches the outflow temperature command.

The control coefficient reference value of the feedback controller is designed by the CHR method or the ZN method illustrated in FIGS. 9 to 11 or by the pole-zero cancellation with use of the dead time L, the time constant $\tau$, and the proportional coefficient K of the circulation temperature, measured in advance, and is stored in the storage unit 27. The correction coefficient that continuously changes the control coefficient is generated by the correction coefficient generation unit 22 by using a circulation flow rate of the second heat medium or a value correlated with the circulation flow rate as illustrated in Expressions (9) to (13), according to the design method. According to the configuration of the present embodiment, by using the outflow temperature as a control target, it is possible to keep the outflow temperature within a range between the upper limit temperature and the lower limit temperature limited by the indoor unit 25. Accordingly, the protection system of the heat pump utilization system can be simplified.

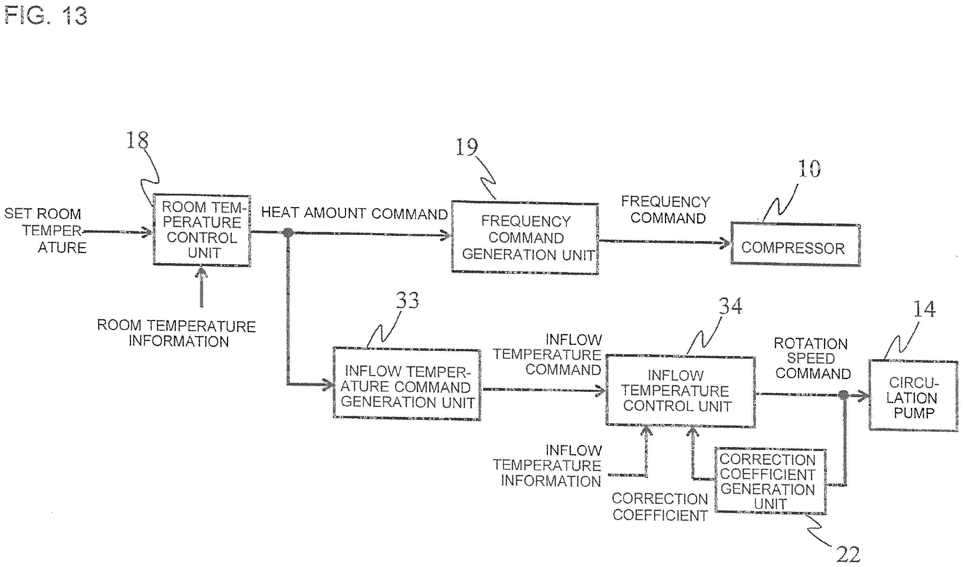

FIG. 13 is a block diagram illustrating still another example of control blocks of the controller of the heat pump utilization system according to the present embodiment. In the example illustrated in FIG. 13, the inflow temperature is used as a control target. The inflow temperature is a temperature of the second heat medium detected by the inflow temperature sensor unit 13. An inflow temperature command generation unit 33 and an inflow temperature control unit 34 are function blocks provided to the processor 28. The inflow temperature command generation unit 33 generates an inflow temperature command based on the heat amount command from the room temperature control unit 18 and the heat amount-inflow temperature characteristic illustrated in FIG. 6(b). The inflow temperature control unit 34 generates a rotation speed command to the circulation pump 14 based on the inflow temperature command, the inflow temperature information, and the correction coefficient. Upon receiving the rotation speed command, the circulation pump 14 operates to approach the commanded rotation speed. This means that the circulation pump 14 is controlled by the inflow temperature control unit 34 such that the inflow temperature approaches the inflow temperature command.

The control coefficient reference value of the feedback controller is designed by the CHR method or the ZN method illustrated in FIGS. 9 to 11 or by the pole-zero cancellation with use of the dead time L, the time constant $\tau$, and the proportional coefficient K of the circulation temperature, measured in advance, and is stored in the storage unit 27. The correction coefficient that continuously changes the control coefficient is generated by the correction coefficient generation unit 22 by using a circulation flow rate of the second heat medium or a value correlated with the circulation flow rate as illustrated in Expressions (9) to (13), according to the design method. According to the configuration of the present embodiment, by controlling the inflow temperature appropriately, the room temperature can be controlled in a range having high heat exchange efficiency by the intermediate heat exchanger 11. Therefore, energy saving performance of the heat pump utilization system is improved.

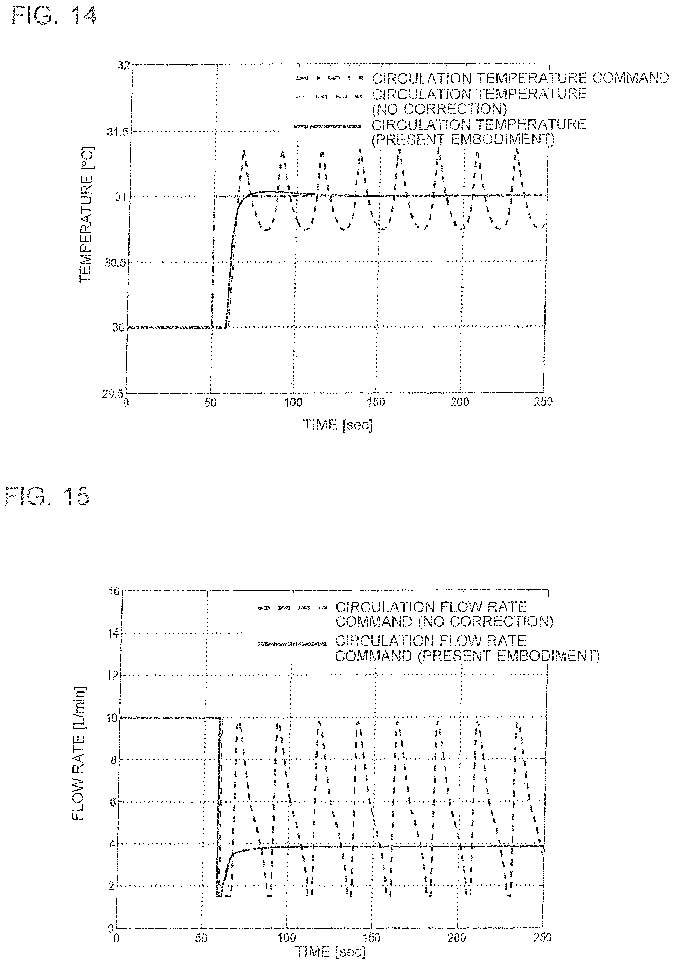

FIGS. 14 and 15 are graphs illustrating exemplary simulations of circulation temperature control in the controller of the heat pump utilization system according to the present embodiment. In FIGS. 14 and 15, the horizontal axes of the graphs represent a common time course (sec), the vertical axis of the graph illustrated in FIG. 14 shows the temperature (degrees C), and the vertical axis of the graph illustrated in FIG. 15 shows the flow rate (L/min). In this example, PI control is used for controlling the circulation temperature, and the CHR method (overshoot 20%) is used for designing the correction coefficient. Further, the lower limit value of the circulation flow rate is set to be 1.5 L/min, the upper limit value is set to be 15 L/min, and the circulation flow rate reference value $FR_{base}$ at the time of control coefficient design is set to be 10 L/min. Further, the proportional coefficient K of the circulation temperature, when the circulation flow rate is the circulation flow rate reference value, is 0.625, the dead time L is 1.5 sec, and the time constant $\tau$ is 15 sec.

As illustrated in FIGS. 14 and 15, when the circulation temperature command is increased by 1 degree C, the circulation flow rate tends to decrease. In the case where the correction coefficient of the present embodiment is not used and the control coefficient is constant at a value at the time of design, the dead time increases due to a decrease of the circulation flow rate. Thereby, vibration of the circulation temperature continues for a long time (in FIG. 14, "circulation temperature (no correction)"). Meanwhile, in the case of making the control coefficient variable by using the correction coefficient of the present embodiment, it is found that the overshoot amount of the circulation temperature is suppressed and vibration of the circulation temperature is also reduced ("circulation temperature (present embodiment)" in FIG. 14).

Further, as illustrated in FIG. 15, according to the response of the circulation flow rate correlated the linear function with the pump rotation speed, in the case of not using the correction coefficient of the present embodiment and setting the control coefficient to be constant at a value at the time of design, the circulation flow rate command vibrates, and the energy saving performance is deteriorated ("circulation flow rate command (no correction)" in FIG. 15). Meanwhile, in the case of using the correction coefficient of the present embodiment and making the control coefficient variable, it is found that a temporal change of the circulation flow rate command is smoothed, and the circulation flow rate command does not vibrate ("circulation flow rate command (present embodiment)" in FIG. 15).

As described above, the present embodiment is particularly effective when the circulation flow rate under control is below the circulation flow rate reference value, and the dead time is longer than that at the time of designing the control coefficient. Here, by setting the circulation flow rate reference value to be smaller, it is possible to reduce vibration of the circulation temperature caused by the fact that the dead time for response is longer when the circulation flow rate decreases. However, when the circulation flow rate reference value is set to be smaller, a response of the circulation temperature control system is delayed, which affects a response of the higher-order room temperature control system. Further, when the circulation flow rate decreases, the heat exchange efficiency also drops. Accordingly, it is desirable to set the circulation flow rate reference value to a value of about 60 to 80% of the circulation flow rate upper limit value.

According to the present embodiment, it is possible to correct an influence of a change in the dead time accompanying a change in the circulation flow rate by using a circulation flow rate or a circulation flow rate correspondence value, on the basis of preset control parameters of the feedback controller. Thereby, the circulation pump 14 can be operable in a wide operation range. As the circulation pump 14 is operable in a wide operation range, the circulation pump 14 having smaller power consumption than that of the compressor 10 can be accelerated or decelerated. Therefore, the energy saving performance is improved. Further, by operating the circulation pump 14 having a higher response than that of the compressor 10, fluctuation of the room temperature due to a change in the sunshine or the ventilation amount can be suppressed, whereby comfortability is improved. Further, as the resolution of the heat amount change can be made fine by manipulating the rotation speed of the circulation pump 14 than that of the compressor 10, the room temperature following property is improved, and comfortability is improved.

Embodiment 2

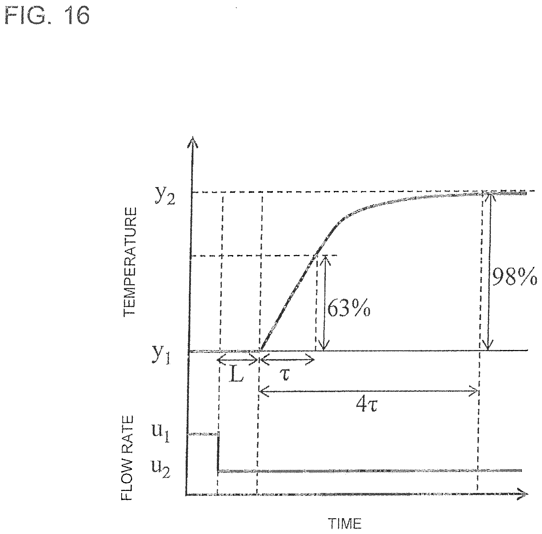

A controller of a heat pump utilization system according to Embodiment 2 of the present invention will be described. FIG. 16 is a graph illustrating exemplary system identification in the controller of the heat pump utilization system according to the present embodiment. The horizontal axis of the graph represents the time, and the vertical axis represents the temperature and the flow rate. The exemplary system identification illustrated in FIG. 16 is one used when designing a control coefficient of a feedback controller of the circulation temperature control unit 21 that controls circulation temperature of a second heat medium. Arithmetic operation of the exemplary system identification is performed by the system identification unit 29. In FIG. 16, a control target is assumed to be a primary delay system + dead time expressed by Expression (6). FIG. 16 exemplary illustrates an exemplary response of circulation temperature in the case of changing the rotation speed of the circulation pump 14 in a state of maintaining the heat amount supplied from the heat pump heat source unit 1 constant, and changing the circulation flow rate of the second heat medium of the use side circulation circuit 16 stepwise. Here, the circulation temperature of the use side circulation circuit 16 before changing the flow rate is $y_1$, a setting value of the circulation temperature of the use side circulation circuit 16 after changing the flow rate is $y_2$, the flow rate of the use side circulation circuit 16 before changing the flow rate is $u_1$, the flow rate of the use side circulation circuit 16 after changing the flow rate is $u_2$, the dead time of the circulation temperature is L, and the time constant of the circulation temperature is $\tau$.

A method of calculating the dead time L, the time constant $\tau$, and the proportional coefficient K of the circulation temperature, required for designing the control coefficient of the feedback controller of the circulation temperature control unit 21, will be described. The dead time L is obtained by measuring the time from when the rotation speed of the circulation pump 14 is changed until the circulation temperature begins to change. The time constant $\tau$ is a period of time from the time when the circulation temperature begins to change until the time when it reaches about 63% of the setting value of the change amount. Further, a period of time from when the circulation temperature begins to change until it reaches about 86% of the setting value of the change amount is $2\tau$, a period of time until it reaches about 95% of the setting value of the change amount is $3\tau$, and a period of time until it reaches about 98% of the setting value of the change amount is $4\tau$. As such, the time constant $\tau$ can be obtained even by performing division after measuring these periods of time. The proportional coefficient K of the circulation temperature can be calculated from Expression (14).
[Expression 14]

$$K = \frac{y_2 - y_1}{u_2 - u_1} \quad \cdots (14)$$

In this way, the control coefficient of the feedback controller can be designed by the CHR method or the ZN method illustrated in FIGS. 9 to 11 or the pole-zero cancellation, with use of the dead time L, the time constant $\tau$, and the proportional coefficient K of the circulation temperature obtained from a step response of the real system. It should be noted that while $u_1$ and $u_2$ represent flow rates of the use side circulation circuit 16 in the present embodiment, $u_1$ and $u_2$ may represent values correlated with the flow rate without limited to the flow rate. For example, they may represent a rotation speed command, rotation speed, and the like of the circulation pump 14. Further, to improve accuracy of the system identification, it is preferable to repeat a step response a plurality of times (three times, for example). It should be noted that in FIG. 16, the circulation temperature increases from $y_1$ to $y_2$ although the flow rate is reduced from $u_1$ to $u_2$ before and after the change of the flow rate. This is because of the characteristic illustrated in FIG. 6(f).

In the case where a control target is outflow temperature as illustrated in FIG. 12, the system identification of the present embodiment can be used by replacing the circulation temperatures $y_1$ and $y_2$ of FIG. 16 with the outflow temperature. Further, in the case where a control target is inflow temperature as illustrated in FIG. 13, the system identification of the present embodiment can be used by replacing the circulation temperatures $y_1$ and $y_2$ of FIG. 16 with the inflow temperature.

The pipe length of the second heat medium and the total amount of the second heat medium differ depending on the type of the indoor unit 25 connected with the heat pump utilization system and the building 2 where it is installed. According to the present embodiment, a control coefficient of the circulation temperature control unit 21 can be designed corresponding to the pipe length of the second heat medium and the total amount of the second heat medium. Therefore, responsiveness of the circulation temperature control system can be further improved, and responsiveness of the high-order room temperature control system can also be further improved.

Embodiment 3

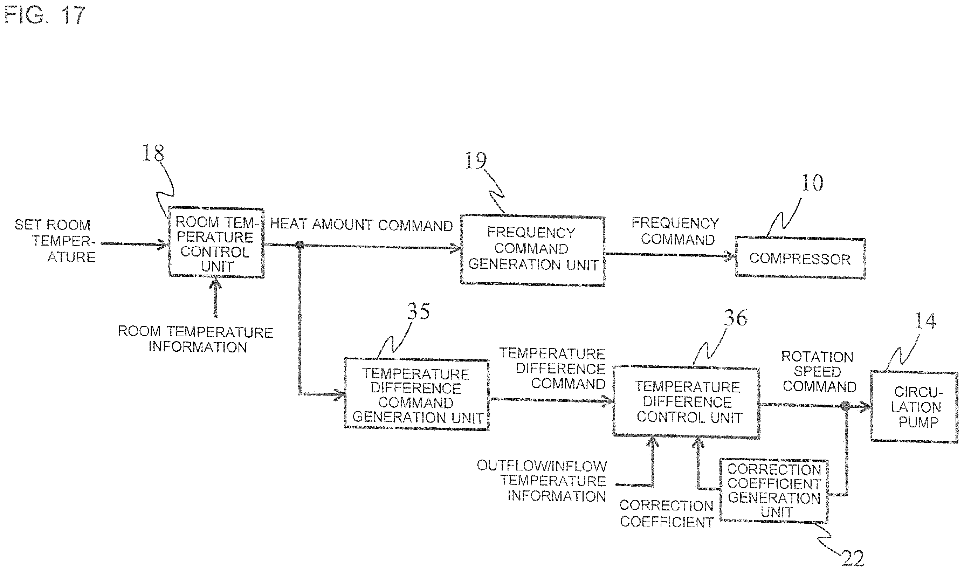

A controller of a heat pump utilization system according to Embodiment 3 of the present invention will be described. FIG. 17 is a block diagram illustrating exemplary control blocks of the controller of the heat pump utilization system according to the present embodiment. It should be noted that constituent elements having the same functions and actions as those of Embodiment 1 are denoted by the same reference numerals and the description thereof is omitted. In the example illustrated in FIG. 17, a temperature difference (outflow/inflow temperature difference) is used as a control target. The outflow/inflow temperature difference is a difference between the outflow temperature of the second heat medium detected by the outflow temperature sensor unit 12 and the inflow temperature of the second heat medium detected by the inflow temperature sensor unit 13. A temperature difference command generation unit 35 and a temperature difference control unit 36 are function blocks provided to the processor 28. The temperature difference command generation unit 35 generates a temperature difference command based on the heat amount command from the room temperature control unit 18 and the heat amount-outflow/inflow temperature difference characteristic illustrated in FIG. 6(c). The temperature difference control unit 36 generates a rotation speed command to the circulation pump 14 based on the temperature difference command, the outflow temperature information, the inflow temperature information, and the correction coefficient. Upon receiving the rotation speed command, the circulation pump 14 operates to approach the commanded rotation speed. This means that the circulation pump 14 is controlled by the temperature difference control unit 36 such that the outflow/inflow temperature difference approaches the temperature difference command.

Even in the case where a control target is an outflow/inflow temperature difference, the system identification of Embodiment 2 can be used by replacing the circulation temperatures $y_1$ and $y_2$ of FIG. 16 with the outflow/inflow temperature difference. The control coefficient reference value of the feedback controller is designed by the CHR method or the ZN method illustrated in FIGS. 9 to 11 or the pole-zero cancellation with use of the dead time L, the time constant $\tau$, and the proportional coefficient K of the circulation temperature calculated through the system identification. The correction coefficients are generated by the correction coefficient generation unit 22 as illustrated in Expressions (9) to (13). Further, the currently supplied heat amount is calculated using the flow rate information from the flow rate sensor unit 17. In the case where an auxiliary heater (not illustrated) for heating the second heat medium is provided to the use side circulation circuit 16 illustrated in FIG. 2, when the heat amount is insufficient only with the heat pump heat source unit 1 (when the room temperature is in a transient state due to a change of the set temperature, for example), an appropriate heat amount command can be given to the auxiliary heater. Thereby, it is easy to suppress the use of the auxiliary heater, having lower efficiency than that of the heat pump heat source unit 1, to a required minimum.

According to the present embodiment, a value correlated with the heat amount can be controlled directly. Therefore, it is easy to suppress the heat amount command to the auxiliary heater to a required minimum.

Embodiment 4

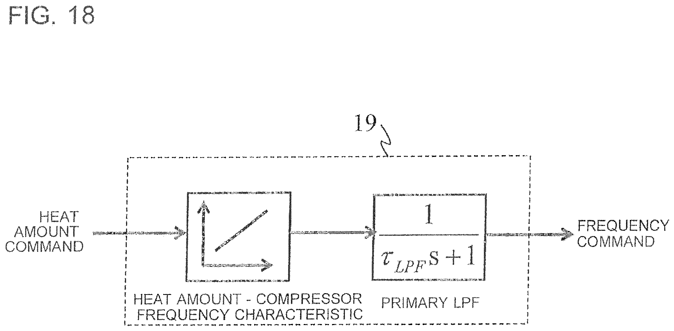

A controller of a heat pump utilization system according to Embodiment 4 of the present invention will be described. FIG. 18 is a block diagram illustrating exemplary control blocks of the frequency command generation unit 19 of the controller of a heat pump utilization system according to the present embodiment. In the example illustrated in FIG. 18, a primary low pass filter (LPF) is used as the frequency command generation unit 19. In this example, $\tau_{LPF}$ is a time constant of the primary LPF. In the frequency command generation unit 19, the primary LPF processes a frequency command that is an output of a heat amount-compressor frequency characteristic. By setting the value of the time constant $\tau_{LPF}$ of the primary LPF to be equal to or larger than a time constant of a closed loop response of the circulation temperature control system, a heat amount, not sufficiently adjusted by the circulation pump 14, is generated. Thereby, the circulation pump 14 having smaller power consumption than that of the compressor 10 is driven in preference, thereby power saving performance is improved. It should be noted that the primary LPF processing may be performed on the heat amount command to be used by the compressor 10. Further, the degree of the LPF may be primary or higher. Further, the time constant of the LPF may be changed continuously in proportion to the circulation flow rate or the rotation speed of the circulation pump 14.

According to the present embodiment, as an LPF of the time constant corresponding to the circulation temperature control system is further provided, the circulation pump 14 having smaller power consumption than that of the compressor 10 can be driven in preference. Therefore, the energy saving performance is improved.

As described above, a controller of the heat pump utilization system according to the aforementioned Embodiments 1 to 4, is a controller that controls the heat pump utilization system including a heat source side circulation circuit 15 through which a first heat medium circulates, and a use side circulation circuit 16 through which a second heat medium circulates. The heat source side circulation circuit 15 is connected with at least a frequency variable compressor 10 and an intermediate heat exchanger 11 in which the first heat medium and the second heat medium exchange heat. The use side circulation circuit 16 is connected with at least a circulation pump 14 having a variable rotation speed, the intermediate heat exchanger 11, and an indoor heat exchanger 3 in which the second heat medium and air inside a room exchange heat. The controller includes a room temperature control unit 18 that generates a heat amount command, based on the room temperature and set room temperature that is a target value of the room temperature, a frequency command generation unit 19 that generates a frequency command to the compressor 10, based on the heat amount command, a circulation temperature command generation unit 20 that generates a circulation temperature command that is a command of circulation temperature of the second heat medium, based on the heat amount command, a circulation temperature control unit 21 that generates a rotation speed command to the circulation pump 14 by feedback control using at least a proportional coefficient, based on the circulation temperature and the circulation temperature command and a correction coefficient generation unit 22 that generates a correction coefficient, based on the circulation flow rate of the second heat medium and a preset circulation flow rate reference value. The circulation temperature is any of inflow temperature of the second heat medium flowing into the intermediate heat exchanger 11, outflow temperature of the second heat medium flowing out of the intermediate heat exchanger 11, and a temperature difference between the outflow temperature and the inflow temperature. The circulation temperature control unit 21 calculates the proportional coefficient by multiplying a preset proportional coefficient reference value by the correction coefficient. The correction coefficient generation unit 22 generates the correction coefficient such that when the circulation flow rate increases beyond the circulation flow rate reference value, the proportional coefficient increases beyond the proportional coefficient reference value, while when the circulation flow rate decreases beyond the circulation flow rate reference value, the proportional coefficient decreases beyond the proportional coefficient reference value.

Further, a heat pump utilization system according to Embodiments 1 to 4 is provided with the controller of the heat pump utilization system described above.

According to this configuration, it is possible to correct an influence of a change in the dead time accompanying a change in the circulation flow rate by using a circulation flow rate or a circulation flow rate correspondence value, on the basis of preset control parameters of the feedback controller. Thereby, the circulation pump 14 is operable in a wide operation range. Further, by operating the circulation pump 14 having a higher response than that of the compressor 10, fluctuation of the room temperature due to a change in the sunshine or the ventilation amount can be suppressed, whereby comfortability is improved. Further, by accelerating or decelerating the circulation pump 14 having smaller power consumption than that of the compressor 10, it is possible to improve the energy saving performance. Further, as the resolution of the heat amount change can be made fine by manipulating the rotation speed of the circulation pump 14 than that of the compressor 10, the room temperature following property is improved, and comfortability is improved.

In the controller of the heat pump utilization system according to the aforementioned embodiment, the circulation temperature control unit 21 may generate the rotation speed command by feedback control further using an integration coefficient, the circulation temperature control unit 21 may calculate the integration coefficient by multiplying a preset integration coefficient reference value by the correction coefficient, and the correction coefficient generation unit 22 may generate the correction coefficient such that when the circulation flow rate increases beyond the circulation flow rate reference value, the integration coefficient increases beyond the integration coefficient reference value, while when the circulation flow rate decreases beyond the circulation flow rate reference value, the integration coefficient decreases beyond the integration coefficient reference value.

According to this configuration, the following property of the circulation temperature is improved.

The controller of the heat pump utilization system according to the aforementioned embodiment may further include a system identification unit 29 that calculates a transmission characteristic of the circulation temperature based on the circulation flow rate as an input and the circulation temperature as an output, and a control coefficient design unit 30 that designs the proportional coefficient reference value based on the transmission characteristic.

According to this configuration, it is possible to cope with a combination of various buildings 2 and various indoor units 25.

The controller of the heat pump utilization system according to the aforementioned embodiment may further include a system identification unit 29 that calculates a transmission characteristic of the circulation temperature based on the circulation flow rate as an input and the circulation temperature as an output, and a control coefficient design unit 30 that designs the proportional coefficient reference value and the integration coefficient reference value based on the transmission characteristic.

According to this configuration, it is possible to cope with a combination of various buildings 2 and various indoor units 25. Further, according to this configuration, the following property of the circulation temperature is improved.

In the controller of the heat pump utilization system according to the aforementioned embodiment, the circulation temperature may be a temperature difference between the outflow temperature and the inflow temperature.

According to this configuration, the heat rejection amount to the inside of the room can be controlled directly. Further, as the heat amount or a value correlated with the heat amount can be controlled directly, it is possible to easily suppress the heat amount command to the auxiliary heater to a required minimum.

In the controller of the heat pump utilization system according to the aforementioned embodiment, the correction coefficient may be generated based on a ratio of the circulation flow rate to the circulation flow rate reference value, and the ratio of the circulation flow rate to the circulation flow rate reference value may be estimated by using the rotation speed of the circulation pump or the rotation speed command.

According to this configuration, a correction coefficient can be calculated without using the flow rate sensor unit 17.

In the controller of the heat pump utilization system according to the aforementioned embodiment, the frequency command generation unit 19 may be provided with a filter having a delay element (primary LPF, for example).

According to this configuration, the rotation speed of the circulation pump 14 having smaller power consumption than that of the compressor 10 can be changed in preference. Therefore, energy saving performance is improved.

The embodiments and modifications described above can be carried out in combination with each other.

Reference Signs List

| | |
|---|---|
| 1 | heat pump heat source unit |
| 2 | building |
| 3 | indoor heat exchanger |
| 4 | system control device |
| 5 | room temperature sensor unit |
| 6 | heat source unit control device |
| 7 | outdoor fan |
| 8 | outdoor heat exchanger |
| 9 | decompression device |
| 10 | compressor |
| 11 | intermediate heat exchanger |
| 11a | first heat medium passage |
| 11b | second heat medium passage |
| 12 | outflow temperature sensor unit |
| 13 | inflow temperature sensor unit |
| 14 | circulation pump |
| 15 | heat source side circulation circuit |
| 16 | use side circulation circuit |
| 17 | flow rate sensor unit |
| 18 | room temperature control unit |
| 19 | frequency command generation unit |
| 20 | circulation temperature command generation unit |
| 21 | circulation temperature control unit |

| | |
|---|---|
| 22 | correction coefficient generation unit |
| 23 | mode determination unit |
| 24 | output data processing unit |
| 25 | indoor unit |
| 26 | input/output unit |
| 27 | storage unit |
| 28 | processor |
| 29 | system identification unit |
| 30 | control coefficient design unit |
| 31 | outflow temperature command generation unit |
| 32 | outflow temperature control unit |
| 33 | inflow temperature command generation unit |
| 34 | inflow temperature control unit |
| 35 | temperature difference command generation unit |
| 36 | temperature difference control unit |
| 37 | indoor unit control device |
| 40 | digital input unit |
| 41 | AD converter unit |
| 42 | serial communication unit |
| 43 | display unit. |

**Claims**

1. A controller of a heat pump utilization system, the controller controlling the heat pump utilization system including a heat source side circulation circuit (15) through which a first heat medium circulates and a use side circulation circuit (16) through which a second heat medium circulates,
the heat source side circulation circuit (15) being connected with at least a frequency variable compressor (10) and an intermediate heat exchanger (11) in which the first heat medium and the second heat medium exchange heat,
the use side circulation circuit (16) being connected with at least a circulation pump (14) having a variable rotation speed, the intermediate heat exchanger (11), and an indoor heat exchanger (3) in which the second heat medium and indoor air exchange heat,
the controller **characterised by** comprising:

a room temperature control unit (18) configured to generate a heat amount command, based on a room temperature and a set room temperature that is a target value of the room temperature;
a frequency command generation unit (19) configured to generate a frequency command to the compressor (10), based on the heat amount command;
a circulation temperature command generation unit (20) configured to generate a circulation temperature command that is a command of circulation temperature of the second heat medium, based on the heat amount command;
a circulation temperature control unit (21) configured to generate a rotation speed command to the circulation pump (14) by feedback control using at least a proportional coefficient, based on the circulation temperature and the circulation temperature command; and
a correction coefficient generation unit (22) configured to generate a correction coefficient, based on the circulation flow rate of the second heat medium and a preset circulation flow rate reference value, wherein
the circulation temperature is any of an inflow temperature of the second heat medium flowing into the intermediate heat exchanger (11), an outflow temperature of the second heat medium flowing out of the intermediate heat exchanger (11), and a temperature difference between the outflow temperature and the inflow temperature,
the circulation temperature control unit (21) is configured to calculate the proportional coefficient by multiplying a preset proportional coefficient reference value by the correction coefficient,
the correction coefficient generation unit (22) is configured to generate the correction coefficient such that when the circulation flow rate increases beyond the circulation flow rate reference value, the proportional coefficient increases beyond the proportional coefficient reference value, while when the circulation flow rate decreases beyond the circulation flow rate reference value, the proportional coefficient decreases beyond the proportional coefficient reference value.

2. The controller of the heat pump utilization system of claim 1, wherein the circulation temperature control unit is configured to generate the rotation speed command by feedback control further using an integration coefficient, the circulation temperature control unit is configured to calculate the integration coefficient by multiplying a preset integration coefficient reference value by the correction coefficient, and

the correction coefficient generation unit is configured to generate the correction coefficient such that when the circulation flow rate increases beyond the circulation flow rate reference value, the integration coefficient increases beyond the integration coefficient reference value, while when the circulation flow rate decreases beyond the circulation flow rate reference value, the integration coefficient decreases beyond the integration coefficient reference value.

3. The controller of the heat pump utilization system of claim 1, further comprising:

a system identification unit configured to calculate a transmission characteristic of the circulation temperature based on the circulation flow rate as an input and the circulation temperature as an output; and
a control coefficient design unit (30) configured to design the proportional coefficient reference value based on the transmission characteristic.

4. The controller of the heat pump utilization system of claim 2, further comprising:

a system identification unit configured to calculate a transmission characteristic of the circulation temperature based on the circulation flow rate as an input and the circulation temperature as an output; and
a control coefficient design unit (30) configured to design the proportional coefficient reference value and the integration coefficient reference value based on the transmission characteristic.

5. The controller of the heat pump utilization system of any one of claims 1 to 4, wherein
the circulation temperature is the temperature difference between the outflow temperature and the inflow temperature.

6. The controller of the heat pump utilization system of any one of claims 1 to 5, wherein
the correction coefficient is generated based on a ratio of the circulation flow rate to the circulation flow rate reference value, and
the ratio of the circulation flow rate to the circulation flow rate reference value is estimated by using a rotation speed of the circulation pump or the rotation speed command.

7. The controller of the heat pump utilization system of any one of claims 1 to 6, wherein
the frequency command generation unit is provided with a filter having a delay element.

8. A heat pump utilization system provided with the controller of the heat pump utilization system of any one of claims 1 to 7.


**Patentansprüche**

1. Regler eines Wärmepumpen-Nutzungssystems, wobei der Regler das Wärmepumpen-Nutzungssystem, einschließlich eines wärmequellenseitigen Umwälzkreislaufs (15), durch welchen ein erstes Heizmedium zirkuliert, und
eines nutzungsseitigen Umwälzkreislaufs (16), durch welchen ein zweites Heizmedium zirkuliert, steuert, wobei der wärmequellenseitige Umwälzkreislauf (15) an mindestens einen frequenzveränderbaren Kompressor (10) und einen Zwischenwärmetauscher (11), in welchem Wärme zwischen dem ersten Heizmedium und dem zweiten Heizmedium ausgetauscht wird, angeschlossen ist,
wobei der nutzungsseitige Umwälzkreislauf (16) an mindestens eine Umwälzpumpe (14) mit variabler Drehgeschwindigkeit, den Zwischenwärmetauscher (11) und einen Innenwärmeaustauscher (3), in welchem zwischen dem zweiten Heizmedium und der Innenraumluft Wärme ausgetauscht wird, der Regler **dadurch gekennzeichnet ist, dass** er Folgendes umfasst:

einen Raumtemperaturregler (18), welcher dazu konfiguriert ist, basierend auf einer Raumtemperatur und einer eingestellten Raumtemperatur, die ein Zielwert der Raumtemperatur ist, einen Wärmemengenbefehl zu generieren; eine Einheit zur Generierung eines Frequenzbefehls (19), welche dazu konfiguriert ist,
basierend auf dem Wärmemengenbefehl einen Frequenzbefehl an den Kompressor (10) zu generieren;
eine Einheit zur Generierung eines Umwälztemperaturbefehls (20), welche dazu konfiguriert ist, basierend auf dem Wärmemengenbefehl einen Umwälztemperaturbefehl zu generieren, welcher ein Umwälztemperaturbefehl für das zweite Heizmedium ist; und

einen Umwälztemperaturregler (21), welcher dazu konfiguriert ist, basierend auf der Umwälztemperatur und dem Umwälztemperaturbefehl durch Rückkopplungsregelung unter Verwendung mindestens eines Proportionalkoeffizienten einen Drehgeschwindigkeitsbefehl an die Umwälzpumpe (14) zu generieren; und eine Einheit zur Generierung eines Korrekturkoeffizienten (22), welche dazu konfiguriert ist, einen Korrekturkoeffizienten basierend auf der Umwälzströmungsgeschwindigkeit des zweiten Heizmediums und einem voreingestellten Bezugswert für die Umwälzströmungsgeschwindigkeit zu generieren, wobei die Umwälztemperatur eine beliebige Eintrittstemperatur des in den Zwischenwärmetauscher (11) fließenden zweiten Heizmediums, eine beliebige Austrittstemperatur des aus dem Zwischenwärmetauscher (11) fließenden Heizmediums, und ein Temperaturunterschied zwischen der Austrittstemperatur und der Eintrittstemperatur ist, der Umwälztemperaturregler (21) dazu konfiguriert ist, den Korrekturkoeffizienten durch Multiplizieren eines voreingestellten Bezugswerts für den Proportionalkoeffizienten mit dem Korrekturkoeffizienten zu berechnen, die Einheit zur Generierung des Korrekturkoeffizienten (22) dazu konfiguriert ist, den Korrekturkoeffizienten zu generieren, so dass, wenn die Umwälzströmungsgeschwindigkeit über den Referenzwert für die Umwälzströmungsgeschwindigkeit steigt, der Proportionalkoeffizient über den Bezugswert für den Proportionalkoeffizienten steigt, während, wenn die Umwälzströmungsgeschwindigkeit unter den Bezugswert für den Proportionalkoeffizienten fällt, der Proportionalkoeffizient unter den Bezugswert für den Proportionalkoeffizienten fällt.

2. Regler des Wärmepumpen-Nutzungssystems gemäß Anspruch 1, wobei der Umwälztemperaturregler dazu konfiguriert ist, den Drehgeschwindigkeitsbefehl durch Rückkopplungskontrolle, bei welcher darüber hinaus ein Integrationskoeffizient zur Anwendung kommt, zu generieren, der Umwälztemperaturregler dazu konfiguriert ist, den Integrationskoeffizienten durch Multiplizieren eines voreingestellten Bezugswerts für den Integrationswert mit dem Korrekturkoeffizienten zu berechnen, und

die Einheit zur Generierung des Korrekturkoeffizienten dazu konfiguriert, ist, den Korrekturkoeffizienten zu generieren, so dass, wenn die Umwälzströmungsgeschwindigkeit über den Referenzwert für die Umwälzströmungsgeschwindigkeit steigt, der Integrationskoeffizient über den Bezugswert für den Integrationskoeffizienten steigt, während, wenn die Umwälzströmungsgeschwindigkeit unter den Bezugswert für die Umwälzströmungsgeschwindigkeit fällt, der Integrationskoeffizient unter den Bezugswert für den Integrationskoeffizienten fällt.

3. Regler des Wärmepumpen-Nutzungssystems gemäß Anspruch 1, welcher darüber hinaus Folgendes umfasst: eine Systemerkennungseinheit, welche dazu konfiguriert ist, basierend auf der Umwälzströmungsgeschwindigkeit als Input und der Umwälztemperatur als Output ein Übertragungsmerkmal der Umwälztemperatur zu berechnen; und eine Regelungskoeffizienten-Entwurfseinheit (30), welche dazu konfiguriert ist, basierend auf dem Übertragungsmerkmal den Bezugswert für den Proportionalkoeffizienten und den Bezugswert für den Integrationskoeffizienten zu entwerfen.

4. Regler des Wärmepumpen-Nutzungssystems gemäß Anspruch 2, welcher darüber hinaus Folgendes umfasst: eine Systemerkennungseinheit, welche dazu konfiguriert ist, basierend auf der Umwälzströmungsgeschwindigkeit als Input und der Umwälztemperatur als Output ein Übertragungsmerkmal der Umwälztemperatur zu berechnen; und eine Regelungskoeffizienten-Entwurfseinheit (30), welche dazu konfiguriert ist, basierend auf dem Übertragungsmerkmal den Bezugswert für den Proportionalkoeffizienten und den Bezugswert für den Integrationskoeffizienten zu entwerfen.

5. Regler des Wärmepumpen-Nutzungssystems gemäß einem der Ansprüche 1 bis 4, wobei die Umwälztemperatur der Temperaturunterschied zwischen der Austrittstemperatur und der Eintrittstemperatur ist.

6. Regler des Wärmepumpen-Nutzungssystems gemäß einem der Ansprüche 1 bis 5, wobei der Korrekturkoeffizient basierend auf einem Verhältnis der Umwälzströmungsgeschwindigkeit zum Bezugswert für die Umwälzströmungsgeschwindigkeit erzeugt wird, und

das Verhältnis der Umwälzströmungsgeschwindigkeit zum Bezugswert für die Umwälzströmungsgeschwindigkeit unter Zugrundelegung einer Drehgeschwindigkeit der Umwälzpumpe oder des Drehgeschwindigkeitsbefehls geschätzt wird.

7. Regler des Wärmepumpen-Nutzungssystems gemäß einem der Ansprüche 1 bis 6, wobei die Einheit zur Generierung eines Frequenzbefehls mit einem Filter ausgestattet ist, welcher ein Verzögerungselement aufweist.

8. Wärmepumpen-Nutzungssystem, welches mit dem Regler des Wärmepumpen-Nutzungssystems gemäß einem der Ansprüche 1 bis 7 ausgestattet ist.

**Revendications**

1. Contrôleur pour un système utilisant une pompe à chaleur, le contrôleur commandant le système utilisant une pompe à chaleur incluant un circuit de circulation côté source de chaleur (15) à travers lequel circule un premier milieu caloporteur et un circuit de circulation côté utilisation (16) à travers lequel circule un second milieu caloporteur, le circuit de circulation côté source de chaleur (15) étant connecté à au moins un compresseur variable en fréquence (10) et à un échangeur de chaleur intermédiaire (11) dans lequel le premier milieu caloporteur et le second milieu caloporteur échangent de la chaleur, le circuit de circulation côté utilisation (16) étant connecté à au moins une pompe de circulation (14) ayant une vitesse de rotation variable, à l'échangeur de chaleur intermédiaire (11), et à un échangeur de chaleur intérieur (3) dans lequel le second milieu caloporteur et l'air intérieur échangent de la chaleur, le contrôleur étant **caractérisé en ce qu'**il comprend :

   une unité de commande de température ambiante (18) configurée pour générer un ordre de quantité de chaleur, sur la base d'une température ambiante et d'une température ambiante de consigne qui est une valeur cible de la température ambiante ;
   une unité de génération d'ordre de fréquence (19) configurée pour générer un ordre de fréquence pour le compresseur (10), sur la base de l'ordre de quantité de chaleur ;
   une unité de génération d'ordre de température de circulation (20) configurée pour générer un ordre de température de circulation qui est un ordre de la température de circulation du second milieu caloporteur, sur la base de l'ordre de quantité de chaleur ;
   une unité de commande de température de circulation (21) configurée pour générer un ordre de vitesse de rotation pour la pompe de circulation (14) par une commande à rétroaction utilisant au moins un coefficient proportionnel, sur la base de la température de circulation et de l'ordre de température de circulation ; et
   une unité de génération de coefficient de correction (22) configurée pour générer un coefficient de correction, sur la base du débit de circulation du second milieu caloporteur et d'une valeur de référence de débit de circulation présélectionnée, dans lequel
   la température de circulation est une température quelconque parmi une température d'écoulement entrant du second milieu caloporteur écoulant en entrant dans l'échangeur de chaleur intermédiaire (11), une température d'écoulement sortant du second milieu caloporteur s'écoulant en sortant de l'échangeur de chaleur intermédiaire (11), et une différence de température entre la température d'écoulement sortant et la température d'écoulement entrant,
   l'unité de commande de température de circulation (21) est configurée pour calculer le coefficient proportionnel en multipliant une valeur de référence de coefficient proportionnel présélectionnée par le coefficient de correction,
   l'unité de génération de coefficient de correction (22) est configurée pour générer le coefficient de correction de telle façon que lorsque le débit de circulation augmente au-delà de la valeur de référence de débit de circulation, le coefficient proportionnel augmente au-delà de la valeur de référence de coefficient proportionnel, alors que lorsque le débit de circulation diminue au-delà de la valeur de référence de débit de circulation, le coefficient proportionnel diminue au-delà de la valeur de référence de coefficient proportionnel.

2. Contrôleur pour système utilisant une pompe à chaleur selon la revendication 1, dans lequel l'unité de commande de température de circulation est configurée pour générer l'ordre de vitesse de rotation par commande avec rétroaction utilisant en outre un coefficient d'intégration, l'unité de commande de température de circulation est configurée pour calculer le coefficient d'intégration en multipliant une valeur de référence de coefficient d'intégration présélectionnée par le coefficient de correction, et l'unité de génération de coefficient de correction est configurée pour générer le coefficient de correction de telle façon que lorsque le débit de circulation augmente au-delà de la valeur de référence de débit de circulation, le coefficient d'intégration augmente au-delà de la valeur de référence de coefficient d'intégration, alors que lorsque le débit de circulation diminue au-delà de la valeur de référence de débit de circulation, le coefficient d'intégration diminue au-delà de la valeur de référence de coefficient d'intégration.

3. Contrôleur pour système utilisant une pompe à chaleur selon la revendication 1, comprenant en outre :

une unité d'identification de système configurée pour calculer une caractéristique de transmission de la température de circulation sur la base du débit de circulation à titre d'entrée et de la température de circulation à titre de sortie; et

une unité de conception de coefficient de commande (30) configurée pour concevoir la valeur de référence de coefficient proportionnel sur la base de la caractéristique de transmission.

4. Contrôleur pour système utilisant une pompe à chaleur selon la revendication 2, comprenant en outre :

une unité d'identification de système configurée pour calculer une caractéristique de transmission de la température de circulation sur la base du débit de circulation à titre d'entrée et de la température de circulation à titre de sortie ; et

une unité de conception de coefficient de commande (30) configurée pour concevoir la valeur de référence de coefficient proportionnel et la valeur de référence de coefficient d'intégration sur la base de la caractéristique de transmission.

5. Contrôleur pour système utilisant une pompe à chaleur selon l'une quelconque des revendications 1 à 4, dans lequel la température de circulation est la différence de température entre la température d'écoulement sortant et la température d'écoulement entrant.

6. Contrôleur pour système utilisant une pompe à chaleur selon l'une quelconque des revendications 1 à 5, dans lequel le coefficient de correction est généré sur la base d'un rapport du débit de la circulation sur la valeur de référence du débit de circulation, et

le rapport du débit de circulation sur la valeur de référence de débit de circulation est estimé en utilisant une vitesse de rotation de la pompe de circulation ou l'ordre de vitesse de rotation.

7. Contrôleur pour système utilisant une pompe à chaleur selon l'une quelconque des revendications 1 à 6, dans lequel l'unité de génération d'ordre de fréquence est dotée d'un filtre ayant un élément à retard.

8. Système utilisant une pompe à chaleur équipé d'un contrôleur pour système utilisant une pompe à chaleur selon l'une quelconque des revendications 1 à 7.

FIG. 1

FIG. 2

EP 3 306 216 B1

FIG. 3

SYSTEM CONTROL DEVICE

27 — STORAGE UNIT
28 — PROCESSOR
4

STORAGE UNIT
- INPUT DATA
- VARIOUS CONTROL COEFFICIENT INITIAL VALUES
- ROOM TEMPERATURE INFORMATION
- OUTFLOW TEMPERATURE INFORMATION
- INFLOW TEMPERATURE INFORMATION
- PUMP ROTATION COMMAND
- FLOW RATE INFORMATION
- CIRCULATION TEMPERATURE CHARACTERISTIC
- RESPECTIVE CONTROL COEFFICIENTS
- VARIOUS CHARACTERISTICS
- SET DATA

PROCESSOR
- MODE DETERMINATION UNIT 23
- SYSTEM IDENTIFICATION UNIT 29
- CONTROL COEFFICIENT DESIGN UNIT 30
- CORRECTION COEFFICIENT GENERATION UNIT 22
- ROOM TEMPERATURE CONTROL UNIT 18
- FREQUENCY COMMAND GENERATION UNIT 19
- CIRCULATION TEMPERATURE COMMAND GENERATION UNIT 20
- CIRCULATION TEMPERATURE CONTROL UNIT 21
- OUTPUT DATA PROCESSING UNIT 24

INPUT/OUTPUT UNIT 40
- DIGITAL INPUT UNIT
- AD CONVERTER UNIT 41
- SERIAL COMMUNICATION UNIT 42
- DISPLAY UNIT 43

26

INDOOR UNIT 25
- INDOOR UNIT CONTROL DEVICE 37
- INDOOR HEAT EXCHANGER 3

HEAT PUMP HEAT SOURCE UNIT 1

25

FIG. 4

EP 3 306 216 B1

FIG. 5

FIG. 6

HEAT AMOUNT
(a)

HEAT AMOUNT
(b)

HEAT AMOUNT
(c)

HEAT AMOUNT
(d)

PUMP ROTATION SPEED
(e)

FLOW RATE
(f)

# FIG. 7

FIG. 8

CIRCULATION
TEMPERATURE
COMMAND

CIRCULATION
TEMPERATURE
INFORMATION

CIRCULATION
TEMPERATURE
DEVIATION

$K_{p\_ct}\alpha_p$

$FR_{ref\_p}$

$K_{i\_ct}\alpha_i T_{c\_ct}$

$FR_{ref\_i}$

$\dfrac{1}{z}$

$FR_{base}$

$FR_{ref\_pi}$

$FR_{ref}$

FLOW RATE -
ROTATION SPEED

ROTATION
SPEED
COMMAND

$Speed_{ref}$

FIG. 9

CHR METHOD (NO OVERSHOOT)

| CONTROL METHOD | PROPORTIONAL COEFFICIENT: $K_P$ | INTEGRATION COEFFICIENT: $K_I$ |
|---|---|---|
| P CONTROL | $0.3\tau/(KL)$ | — |
| PI CONTROL | $0.35\tau/(KL)$ | $0.3/(KL)$ |

FIG. 10

CHR METHOD (OVERSHOOT 20%)

| CONTROL METHOD | PROPORTIONAL COEFFICIENT: $K_P$ | INTEGRATION COEFFICIENT: $K_I$ |
|---|---|---|
| P CONTROL | $0.7\tau/(KL)$ | — |
| PI CONTROL | $0.6\tau/(KL)$ | $0.6/(KL)$ |

FIG. 11

Ziegler-Nichols STEP RESPONSE METHOD

| CONTROL METHOD | PROPORTIONAL COEFFICIENT: $K_P$ | INTEGRATION COEFFICIENT: $K_I$ |
|---|---|---|
| P CONTROL | $\tau/(KL)$ | — |
| PI CONTROL | $0.9\tau/(KL)$ | $0.27\tau/(K(L)^2)$ |

FIG. 12

SET ROOM
TEMPER-
ATURE → ROOM TEM-PERATURE CONTROL UNIT (18) → HEAT AMOUNT COMMAND → FREQUENCY COMMAND GENERATION UNIT (19) → FREQUENCY COMMAND → COMPRESSOR (10)

ROOM TEMPERATURE INFORMATION

OUTFLOW TEMPERATURE COMMAND GENERATION UNIT (31) → OUTFLOW TEMPERATURE COMMAND → OUTFLOW TEMPERATURE CONTROL UNIT (32) → ROTATION SPEED COMMAND → CIRCU-LATION PUMP (14)

OUTFLOW TEMPERATURE INFORMATION

CORRECTION COEFFICIENT ← CORRECTION COEFFICIENT GENERATION UNIT (22)

EP 3 306 216 B1

FIG. 13

FIG. 14

FIG. 15

FIG. 16

# FIG. 17

SET ROOM
TEMPER-
ATURE → ROOM TEM-
PERATURE
CONTROL
UNIT (18) →HEAT AMOUNT COMMAND→ FREQUENCY
COMMAND
GENERATION UNIT (19) →FREQUENCY
COMMAND→ COMPRESSOR (10)

ROOM TEMPERATURE
INFORMATION

TEMPERATURE
DIFFERENCE
COMMAND
GENERATION UNIT (35) →TEMPERATURE
DIFFERENCE
COMMAND→ TEMPERATURE
DIFFERENCE
CONTROL UNIT (36) →ROTATION
SPEED
COMMAND→ CIRCU-
LATION
PUMP (14)

OUTFLOW/INFLOW
TEMPERATURE
INFORMATION

CORRECTION
COEFFICIENT

CORRECTION
COEFFICIENT
GENERATION
UNIT (22)

EP 3 306 216 B1

36

FIG. 18

19

HEAT
AMOUNT
COMMAND

$$\frac{1}{\tau_{LPF}s+1}$$

FREQUENCY
COMMAND

HEAT AMOUNT - COMPRESSOR
FREQUENCY CHARACTERISTIC

PRIMARY LPF

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004069134 A
- WO 2010070842 A